# EUROPÄISCHE PATENTSCHRIFT

(11) **EP 0 897 325 B1**
(45) Veröffentlichungstag und Bekanntmachung des Hinweises auf die Patenterteilung: **08.08.2001**
(21) Anmeldenummer: 97921843.5
(22) Anmeldetag: 01.05.1997
(51) Int. Cl.: B05C 3/10, B05C 19/02, B05C 13/02, C03C 17/00

(54) **VERFAHREN ZUR BESCHICHTUNG VON GLASBEHÄLTERN UND BESCHICHTETER GLASBEHÄLTER**
PROCESS FOR COATING GLASS CONTAINERS AND COATED GLASS CONTAINERS
PROCEDE POUR L'APPLICATION D'UN REVETEMENT SUR DES RECIPIENTS EN VERRE, ET RECIPIENTS EN VERRE POURVUS D'UN REVETEMENT

(30) Priorität: 07.05.1996 DE 19618206
(43) Veröffentlichungstag der Anmeldung: 24.02.1999
(60) Teilanmeldung: 00101733.4
(73) Patentinhaber: FIRMA HERMANN HEYE, D-31683 Obernkirchen (DE)
(72) Erfinder: BUSCHMEIER, Ulrich, D-31683 Obernkirchen (DE); BÜLOW, Jürgen, D-31655 Stadthagen (DE); BÖGERT, Hermann, D-31749 Auetal (DE); FÜHR, Hans-Bernhard, D-31655 Stadthagen (DE); MEYER, Henning, Dr., D-31683 Obernkirchen (DE); SCHULZE-BERGKAMEN, Hilmar, Dr., D-58452 Witten (DE); SEIDEL, Hans-Georg, D-31737 Rinteln (DE); GEISEL, Gerhard, D-31675 Bückeburg (DE)
(74) Vertreter: Kosel, Peter, Dipl.-Ing.
(86) Internationale Anmeldenummer: EP9702233
(87) Internationale Veröffentlichungsnummer: WO9741966

(56) Entgegenhaltungen:
- DE-A- 2 655 411

## Beschreibung

Die Erfindung betrifft ein Verfahren gemäß dem Oberbegriff des Anspruchs 1 und einen Glasbehälter gemäß dem Oberbegriff des Anspruchs 15.

Bei einem bekannten Verfahren dieser Art (EP 0 442 735 A2) werden zahlreiche Greifvorrichtungen an einem kontinuierlich umlaufenden Endlosförderer durch eine Beschichtungsanlage transportiert. Jede Greifvorrichtung ergreift an einer Aufnahmestelle eine quer zur Transportrichtung angeordnete Reihe Glasbehälter und führt die Reihe schräg nach oben, danach schräg nach unten, wo die Reihe in ein Bad mit flüssigem Beschichtungsmaterial getaucht wird, und anschließend wieder schräg nach oben auf ein oberes Niveau. Auf diesem Niveau durchläuft die Reihe eine Bodenaushärtezone und wird danach schräg nach unten geführt und auf einem Transportband abgesetzt. Auf dem Transportband durchläuft die Reihe eine Aushärtezone zur Aushärtung der bis dahin noch nicht ausgehärteten Teile der Schicht auf den Glasbehältern. Die entleerten Greifvorrichtungen werden am Rücktrum des Endlosförderers zur Aufnahmestelle zurücktransportiert. Alle Vorrichtungen sind an dem Endlosförderer fest montiert und bewegen sich daher ständig mit der gleichen Geschwindigkeit.

Auch aus der WO 94/17002 A1 ist es bekannt, zahlreiche Greifvorrichtungen an einem Endlosförderer durch die Beschichtungsanlage zu führen. Jede Greifvorrichtung ergreift vom Kühlofenband eine quer zur Transportrichtung angeordnete Reihe Glasbehälter. Jede Reihe wird schräg nach oben bewegt, dann schräg nach unten und in ein Bad mit flüssigem Beschichtungsmaterial getaucht und nach dem Verlassen des Bades zunächst auf einer schräg aufsteigenden und wieder schräg abfallenden Bahn durch eine Zone zur thermischen Alterung des Tauchüberzugs und sodann - wiederum in schrägen Auf- und Abwärtsbewegungen - durch eine Aushärtezone geführt und schließlich wieder auf dem Kühlofenband abgesetzt. Jede Greifvorrichtung weist zwei Greifleisten auf, die jeweils alle Glasbehälter der betreffenden Gruppe auf gegenüberliegenden Seiten unterhalb der Mündung ergreifen. Die beiden Greifleisten werden durch mehrere über ihre Länge verteilte Antriebsvorrichtungen synchron geöffnet oder geschlossen. Jede Antriebsvorrichtung weist einen an einem Basisteil montierten Zylinder einer Kolben-Zylinder-Einheit auf, dessen Kolbenstange am unteren freien Ende parallel zu den Greifleisten eine Stange trägt, die in senkrechten Schlitzen des Basisteils geführt ist. Betätigungsarme der Greifleisten erstrecken sich quer zu einer Längsachse der Greifleisten und sind jeweils um eine Achse des Basisteils, mit einem Langloch hoch- und abwärtsschwenkbar auf der Stange gelagert. Auch hier laufen alle Greifvorrichtungen ständig mit der gleichen Geschwindigkeit um.

Aus der DE 26 55 411 A1 ist eine andere Art der Beschichtung bekannt. Hier sind eine Vielzahl von Wagen in einer Transportebene auf Schienensegmenten unabhängig voneinander verfahrbar. Jeder Wagen weist quer zu einer Transportrichtung mehrere Greifeinheiten auf. In einer ersten Lücke zwischen Schienensegmenten nimmt eine Halterung einen leeren Wagen auf und schwenkt ihn abwärts zu einer Aufnahmestelle einer Temperiervorrichtung für reihenweise angeordnete Flaschen. Dort greifen die Greifeinheiten des Wagens eine Flaschenreihe. Die Halterung wird mitsamt dem gefüllten Wagen in die erste Lücke hochgeschwenkt. Von dort wird der Wagen über ein Schienensegment in ein in einer zweiten Lücke wartendes Hubwerk gefahren. Das Hubwerk wird mitsamt dem Wagen in senkrechter Richtung abgesenkt, bis die Flaschen in ein Wirbelbett aus Thermoplastpulver eintauchen. Sobald genügend Pulver an den Flaschen haftet, wird das Hubwerk hochgefahren und der Wagen mit der beschichteten Flaschenreihe in der zweiten Lücke auf ein Schienensegment geschoben. Auf diesem Schienensegment durchläuft der Wagen mit der Flaschenreihe nacheinander eine Durchwärmungskammer, eine Lüftungskammer und eine Sprühabschreckkammer. Danach wird die Flaschenreihe in einer Abgabestation durch Passivieren der Greifeinheiten abgegeben.

Aus der deutschen Zeitschrift SPRECHSAAL, Vol. 122, No. 5, 1989, Seiten 473 bis 475, ist es an sich bekannt, bei 0,5 l bis 1,5 l-Glasflaschen für CO₂-haltige Getränke für den Mehrwegeinsatz mit mehr als 30 Umläufen bei einer Festigkeitsminderung von weniger als 10 % das Gewicht um ca. 40 % zu verringern. Dazu werden die Flaschen in Leichtglastechnologie hergestellt und anschließend nach Vorwärmung außen mit einem Mehrschichtsystem mit einer Grundschicht als Haftvermittler und einer darüberliegenden Schutzschicht überzogen. Bei der Schutzschicht soll es sich vorzugsweise um ein Einkomponenten-Polyurethansystem handeln. Die Schutzschicht wird als hochviskose Beschichtungsmasse auf die Haftvermittlerschicht aufgebracht. Anschließend wird die Beschichtungsmasse durch ein Bürstensystem homogenisiert und auf eine Schichtdicke zwischen 100 *µ*m und 300 *µ*m eingestellt. Es folgen die Aushärtung der Beschichtung und die Kühlung der Flaschen. Dieses bekannte Verfahren ist auf die Bedürfnisse bei Mehrwegflaschen für CO₂-haltige Getränke abgestellt.

Aus der DE-Offenlegungsschrift 2 219 470 ist ein anderes Beschichtungsverfahren an sich bekannt. An einem Kettenförderer sind in Abständen um eine waagerechte Achse heb- und senkbare Halter für jeweils eine Flasche angeordnet. In einer Hochstellung wird die Flasche vorgewärmt, dann in ein Fließbett aus Kunststoffteilchen abgesenkt und dann wieder in Hochstellung durch einen Schmelzofen bewegt.

Aus der US 4 022 155 A und der DE-Offenlegungsschrift 2 310 923 ist es an sich bekannt, Glasbehälter mit einer parallelogrammartigen Handhabungsvorrichtung an Greifvorrichtungen von einem ersten Förderband über eine Beschichtungsstation und nach dem Beschichten auf ein zweites Förderband weiterzuschwenken. Die Beschichtungsstation weist ein Wirbelbett auf, in das die Behälter eingetaucht werden. Das Wirbelbett enthält ein thermoplastisches Polymer.

Aus der US 3 270 710 A ist es an sich bekannt, eine Glasflasche zunächst mit einem flüssigen Primer und sodann mit einem flüssigen Vinylharz zu überziehen.

Aus der US 3 200 002 A ist es an sich bekannt, Flaschen im Tauchverfahren mit einem flüssigen Plastisol zu überziehen und dazu Greifvorrichtungen kontinuierlich mit einer endlosen Förderkette zu bewegen.

Aus der DE 26 17 976 82 ist eine besondere, glockenförmige Greifeinheit an sich bekannt. Innerhalb einer geschlossenen, äußeren Glocke ist mit einem Kolben eine längsgeschlitzte Federhülse verschiebbar geführt. An jeder Zunge der Federhülse befindet sich unten eine Greifklaue, die bei axialer Relativbewegung zwischen Federhülse und Glocke durch einen verschleißfesten Ring radial nach innen in formschlüssige Berührung mit dem Glasbehälter bewegt wird. Ein mit der Glocke starr verbundener Stopfen sitzt oben auf der Mündung oder dem Verschluß des Glasbehälters. Eine Druckfeder spannt die Greifklauen in ihre Greifposition vor. Die Greifklauen werden durch Druckluft in ihre Freigabeposition geführt. Die Druckluft wirkt auf die Oberseite des Kolbens der Federhülse.

Aus der DE 24 31 952 C2 ist an sich bekannt ein Verfahren zum Schutz von Glasflaschen vor dem Zersplittern durch Aufbringen einer Kunststoffbeschichtung, bei dem die Glasflaschen mit einem Beschichtungspulver aus weichgemachten duroplastischen Harzen durch Tauchen in ein Wirbelbett oder ein elektrostatisches Wirbelbett beschichtet werden, und das in einer Dicke von mindestens 50 *µ*m aufgebrachte Harz thermisch ausgehärtet wird. Dadurch wird eine Beschichtung geschaffen, die bei guter Haftfestigkeit und Alkalibeständigkeit sowie bei geringem Reibungswiderstand auch einen guten Splitterschutz bietet und dabei eine glatte, transparente Oberfläche aufweist sowie wirtschaftlich herstellbar ist.

Die aus der DE 25 10 734 82 bekannte Lösung betrifft ein Verfahren zum Beschichten von Glasflaschen mit einer transparenten, duroplastischen Schutzschicht durch Auftragen von Pulverlacken in einem Wirbelbett oder in einem elektrostatischen Wirbelbett. Zuvor werden allerdings die reinen Glasflaschen mit einer wässrigen oder alkoholischen Silanschlichte behandelt, getrocknet und erwärmt. Die aufgebrachte Schutzschicht ist hochelastisch, besitzt ausgezeichnete Haftung und Alkalibeständigkeit und gewährleistet eine längere Gebrauchsdauer bei Einsatz als Mehrwegflasche.

Aus der DE 27 48 696 A1 ist ein Verfahren zum Beschichten von Glashohlkörpern bekannt, bei dem als Beschichtungsmaterial ein duroplastischer Pulverlack verwendet wird, der in einem Wirbelbett aufgebracht wird.

Der Erfindung liegt die Aufgabe zugrunde, das Beschichten der Glasbehälter und die beschichteten Glasbehälter selbst zu verbessern.

Diese Aufgabe ist hinsichtlich des Verfahrens durch die Merkmale des Anspruchs 1 gelöst. Dadurch läßt sich die Handhabungsvorrichtung vereinfachen und ist ein störungsfreier Transport der Glasbehälter erleichtert. Vorzugsweise wird jede Gruppe der Glasbehälter von dem Kühlofenband eines einer Glasformmaschine nachgeschalteten Kühlofens abgenommen. So läßt sich die den Glasbehältern am Ende des Kühlofens noch innewohnende Wärmeenergie optimal dazu ausnutzen, das Beschichtungsmedium auf die optimal temperierten Glasbehälter aufzutragen und anschließend zu einer widerstandsfähigen Schutzschicht zu verfestigen. Vorteilhafterweise wird die Gruppe während der Abnahme vom kontinuierlich laufenden Kühlofenband in der Transportrichtung des Kühlofenbands mitbewegt und dann in die senkrechte Bewegungsrichtung übergegangen. So lassen sich die Glasbehälter schonend und zügig aufnehmen. Die Greifvorrichtungen sind voneinander entkoppelt und können auf jedem Bahnabschnitt mit optimalem Geschwindigkeitsprofil bewegt werden. Dies kommt auch der Qualität der Schicht und damit der Glasbehälter zugute. Die für eine gleichmäßige und - zur Einsparung von Beschichtungsmedium - möglichst dünne Ausbildung der Schicht wichtige Eintauchdauer der Glasbehälter in das Beschichtungsmedium kann sehr genau eingehalten werden.

Gemäß Anspruch 2 kann das Mitschleppen von Beschichtungsmediumresten über die Absetzplatte hinaus verringert oder verhindert werden.

Nach Anspruch 3 ergibt sich eine besonders schnelle und kostengünstige Betriebsweise.

Die Merkmale des Anspruchs 4 empfehlen sich, wenn die Schicht an den Böden der Glasbehälter zunächst verfestigt werden soll, bevor die Glasbehälter auf dem Transportband abgesetzt werden.

Die Merkmale des Anspruchs 5 führen zu einer insgesamt günstigen Bewegungscharakteristik für die Glasbehälter.

Die Servicestation gemäß Anspruch 6 wird entweder in jedem Betriebszyklus oder nur bei Bedarf mit der Greifvorrichtung angefahren.

Die Merkmale des Anspruchs 7 bieten eine bauliche und betriebliche Vereinfachung.

Gemäß Anspruch 8 ist ein Schnellwechsel des Behälters auch innerhalb des normalen Betriebszyklus möglich.

Nach Anspruch 9 werden die anderen Greifvorrichtungen in einem eigenen Kreislauf bewegt.

Vorzugsweise geschieht eine Bodenaushärtung im Stillstand der Glasbehälter. Eine Beheizung durch Wärmestrahlung kann nicht nur von unten, sondern unter beliebiger, geeigneter Winkelstellung einer Heizanordnung und der Behälterböden erfolgen.

Gemäß Anspruch 10 können die Glasbehälter z.B. mit einer reibungsmindernden flüssigen Lösung besprüht werden, z.B. mit einer an sich bekannten Kaltendvergütung.

Gemäß Anspruch 11 ergibt sich eine gleichmäßige und gut kontrollierbare Beschichtung. Alternativ könnte das Pulver auch durch ein an sich bekanntes elektrostatisches Beschichtungsverfahren auf die Glasbehälter aufgetragen werden.

Die Merkmale des Anspruchs 12 führen zu einer besonders günstigen Beschichtung der Glasbehälter. So ausgestattete Glasbehälter sind auch zur Aufnahme von Füllgütern unter erhöhtem Innendruck, z.B. CO₂-haltigen Getränken, geeignet. Beispielsweise wird Pulver einer Korngröße von 5 bis 60 *µ*m verwendet.

Gemäß jedem der Ansprüche 13 und 14 ergibt sich eine besonders glatte Oberfläche der Schicht.

Die zuvor erwähnte Aufgabe ist hinsichtlich des Glasbehälters durch die Merkmale des Anspruchs 15 gelöst. Damit ist es möglich, die Glasmasse und damit die Wanddicke des Glasbehälters gegenüber dem Stand der Technik deutlich zu verringern. Jede derartige Verringerung führt zu erheblichen wirtschaftlichen Vorteilen. Die Dicke der Schicht kann 30 bis 60 µm betragen.

Gemäß Anspruch 16 kann die Pulverlackschicht je nach Bedarf glänzend, durchscheinend, glatt, glasklar, eingefärbt, oder auf andere Weise besonders ausgestaltet werden. Die zumindest annähernd duroplastische Pulverlackschicht stellt einen ausgezeichneten Schutz vor Beschädigungen der Glasoberfläche dar. So ist es möglich, die Gebrauchsfestigkeit des Glases während des Einsatzes des Glasbehälters zu bewahren.

Im wesentlichen die gleichen Vorteile und zusätzlich eine besonders glatte Oberfläche der Schicht ergeben sich gemäß Anspruch 17.

Die Merkmale jedes der Ansprüche 18 bis 32 verdeutlichen an Beispielen von marktgängigen Einweg-Glasbehältern die möglichen Einsparungen an Glasmasse.

Diese und weitere Merkmale und Vorteile der Erfindung werden nachfolgend anhand der in den Zeichnungen dargestellten Ausführungsbeispiele näher erläutert. Es zeigt:
Fig. 1 eine schematische Seitenansicht einer ersten Ausführungsform der Beschichtungsvorrichtung,
Fig. 2 eine schematische Seitenansicht einer anderen Ausführungsform der Beschichtungsvorrichtung,
Fig. 3 die Draufsicht auf die Vorrichtung gemäß Fig. 2,
Fig. 4 die Ansicht gemäß Linie IV-IV in Fig. 1 in vergrößerter Darstellung,
Fig. 5, 6 und 7 jeweils einen Längsschnitt durch eine Greifeinheit der Vorrichtung in unterschiedlichen Betriebssituationen,
Fig. 8 die Ansicht gemäß Linie VIII-VIII in Fig. 5,
Fig. 9 die Ansicht gemäß Linie IX-IX in Fig. 5,
Fig. 10 die Schnittansicht gemäß Linie X-X in Fig. 5,
Fig. 11 die Schnittansicht nach Linie XI-XI in Fig. 7,
Fig. 12 die Schnittansicht nach Linie XII-XII in Fig. 8,
Fig. 13 die Schnittansicht nach Linie XIII-XIII in verkleinerter Darstellung,
Fig. 14 die Ansicht gemäß Linie XIV-XIV in Fig. 6,
Fig. 15 die Schnittansicht nach Linie XV-XV in Fig. 5,
Fig. 16 einen Längsschnitt durch einen Randbereich eines Wirbelsinterbetts,
Fig. 17 eine schematische Draufsicht auf ein Heizregister zur Aushärtung der Bodenschicht der Glasbehälter,
Fig. 18 die Draufsicht auf einen Teil eines die beschichteten Glasbehälter aufnehmenden Transportbands,
Fig. 19 eine schematische Seitenansicht einer weiteren Ausführungsform der Beschichtungsvorrichtung,
Fig.20 ein besonderes Stellschema für die Glasbehälter und
Fig. 21 einen Längsschnitt durch eine Absetzplatte für eine Gruppe der Glasbehälter.

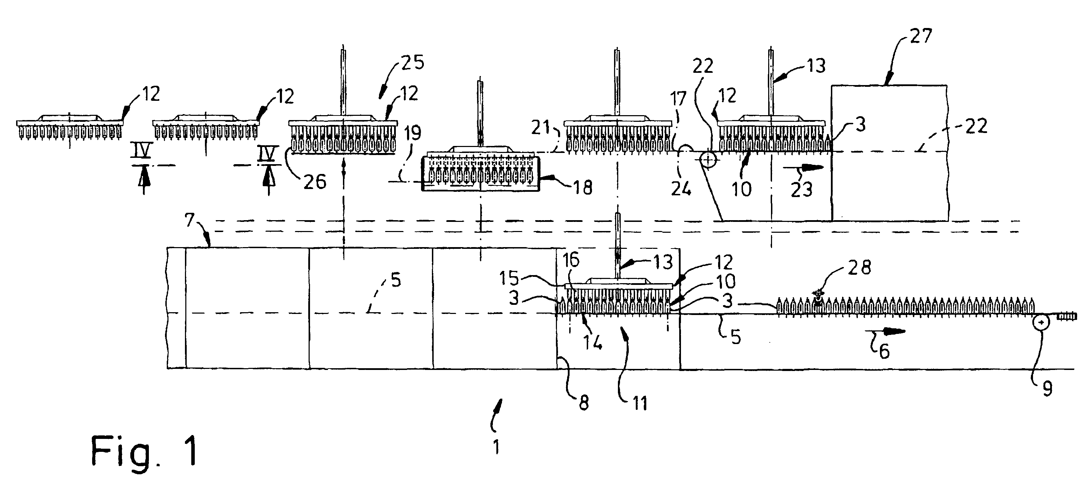

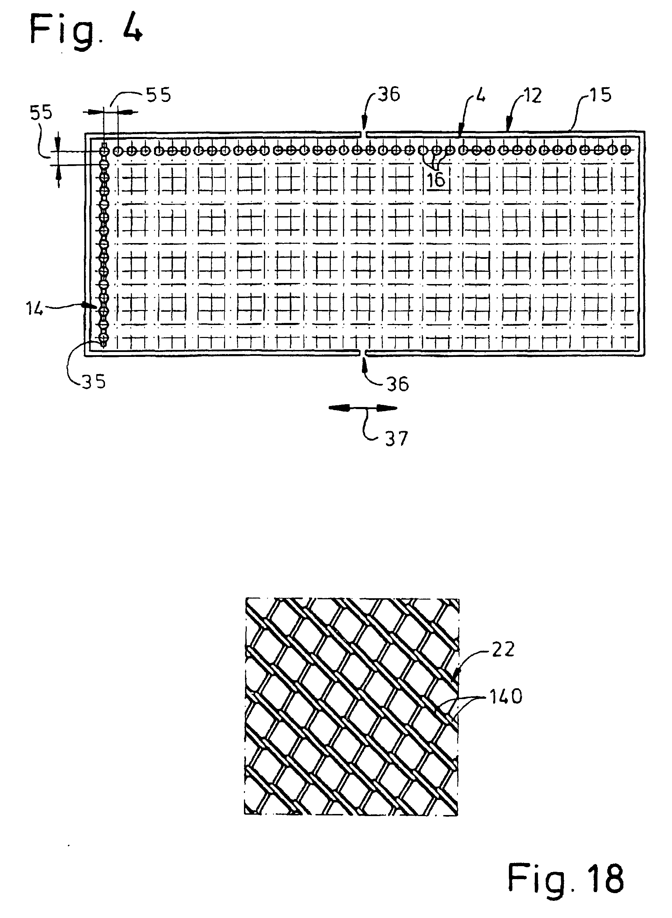

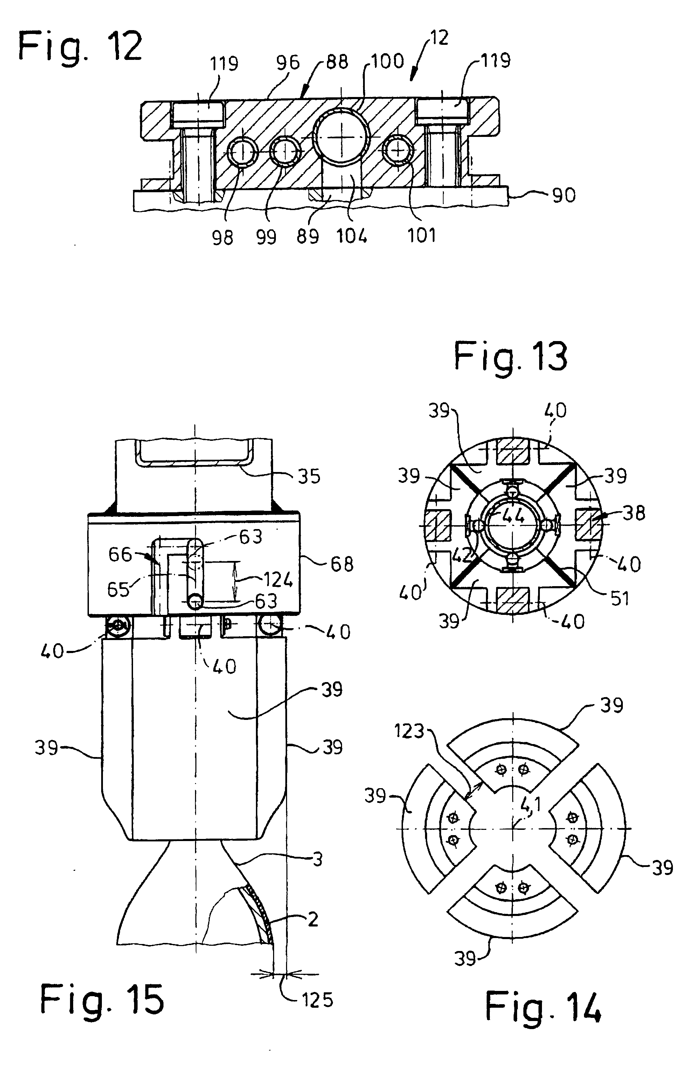

Fig. 1 zeigt eine Vorrichtung 1 zur Aufbringung einer Schicht 2 (Fig. 15) auf einen Teil der Außenfläche von Glasbehältern 3. Die Glasbehälter 3 werden in einer nicht gezeichneten Glasformmaschine hergestellt und z.B. in 40 zueinander parallelen Spalten 4 (Fig. 4) auf ein Kühlofenband 5 geschoben. Ein Obertrum des endlosen Kühlofenbands 5 bewegt sich kontinuierlich in einer Transportrichtung 6. Das Kühlofenband 5 durchläuft zunächst einen Kühlofen 7 bis zu einem hinteren Ende 8 des Kühlofens 7 und läuft dann weiter bis zu einer Umlenkstelle 9, von der es zum vorderen Ende des Kühlofens 7 zurückgeführt wird.

Bei den Glasbehältern 3 handelt es sich insbesondere um Flaschen, die vor ihrem Eintritt in den Kühlofen 7 mit einer sogenannten Heißendvergütung versehen werden. Dabei handelt es sich um eine Zinnoxid- oder Zinndioxidschicht, die in gasförmiger Phase auf die Glasbehälter 3 aufgebracht wird. Dies geschieht zumeist im sogenannten CVD (Chemical Vapor Deposition)-Verfahren. Die Heißendvergütung hat anorganische Eigenschaften. Auf dieser oxidischen Oberfläche haftet die nachfolgend erfindungsgemäß aufzubringende Schicht gleichgut wie auf der ebenfalls oxidischen frischen Glasoberfläche, die zuvor nicht mit einer Heißendvergütung versehen wurde. Erfindungsgemäß können also sowohl Glasbehälter 3 mit Heißendvergütung als auch Glasbehälter 3 ohne Heißendvergütung mit gleichem Erfolg beschichtet werden.

Der Kühlofen 7 bildet eine Temperiervorrichtung, an deren hinterem Ende 8 die Glasbehälter 3 alle eine möglichst gleiche Temperatur im Bereich von 100 bis 160° C aufweisen.

Gleich hinter dem hinteren Ende 8 des Kühlofens 7 wird eine Gruppe 10 der Glasbehälter 3 an einer Aufnahmestelle 11 durch eine Greifvorrichtung 12 einer Handhabungsvorrichtung 13 gegriffen. Während dieses Greifvorgangs läuft das Kühlofenband 5 in der Transportrichtung 6 weiter. Deshalb wird die Handhabungsvorrichtung 13 während der Abnahme der Gruppe 10 vom Kühlofenband 5 in nicht dargestellter Weise überlagert in der Transportrichtung 6 und nach oben gefahren. So kann die Gruppe 10 aufgenommen werden, ohne daß die auf dem Kühlofenband 5 nachrückenden Glasbehälter 3 dadurch beeinträchtigt würden.

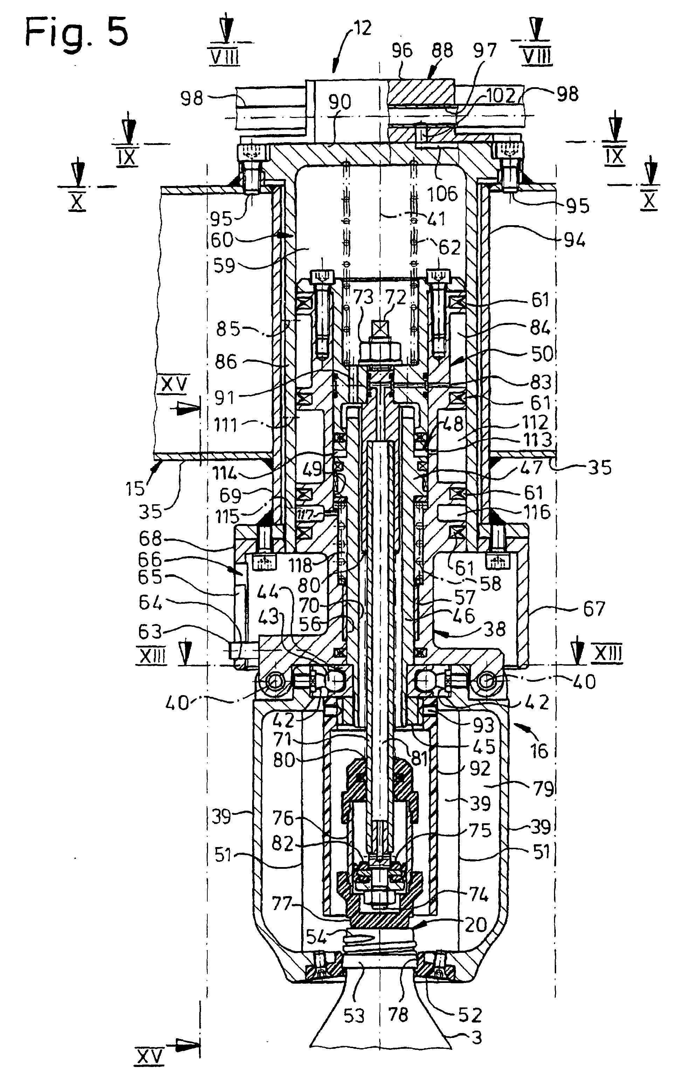

In dem dargestellten Ausführungsbeispiel besteht die Gruppe 10 aus einer Matrix von 40 Spalten 4 (Fig. 4) und 15 Reihen 14, also insgesamt 600 Glasbehältern 3. Die Greifvorrichtung 12 weist einen Träger 15 auf, der entlang einer im einzelnen nicht gezeichneten Bahn der Handhabungsvorrichtung 13 bewegbar ist. An dem Träger ist für jeden Glasbehälter 3 der Gruppe 10 eine Greifeinheit 16 angeordnet, deren Einzelheiten im Zusammenhang mit den Fig. 5 bis 15 erläutert werden.

Von der Aufnahmestelle 11 wird die Gruppe 10 durch die Handhabungsvorrichtung 13 in im wesentlichen senkrechter Richtung auf ein erstes Niveau 17 angehoben, sodann in waagerechter Richtung in Fig. 1 nach links über einen Behälter 18 transportiert und schließlich in senkrechter Richtung auf ein zweites Niveau 19 in dem Behälter 18 abgesenkt. Der Behälter 18 enthält ein Pulver als Beschichtungsmedium für die Glasbehälter 3 und bildet mit diesem Pulver ein Wirbelsinterbett.

Normalerweise umgreifen die Greifeinheiten 16 eine Mündung 20 (Fig. 5) des zugehörigen Glasbehälters 3 und verhindern, daß die Mündung 20 mit dem Pulver beschichtet wird. Um eine vollständige Beschichtung des Rests der Glasbehälter 3 zu gewährleisten, werden nicht nur die Glasbehälter 3, sondern auch ein unterer, z.B. maximal 20 mm hoher Bereich der Greifeinheiten 16 in das Pulver in dem Behälter 18 eingetaucht. Die Eintauchdauer beträgt z.B. von > 0 s bis < 5 s, bis genügend Pulver an der erhitzten Oberfläche des Glasbehälters 3 haftet. Die Gruppe 10 wird sodann durch die Handhabungsvorrichtung 13 von dem zweiten Niveau 19 auf ein drittes Niveau 21 angehoben und anschließend in waagerechter Richtung, in Fig. 1 nach rechts, über ein Transportband 22 transportiert. Zweckmäßigerweise wird das dritte Niveau 21 gleich dem ersten Niveau 17 gemacht.

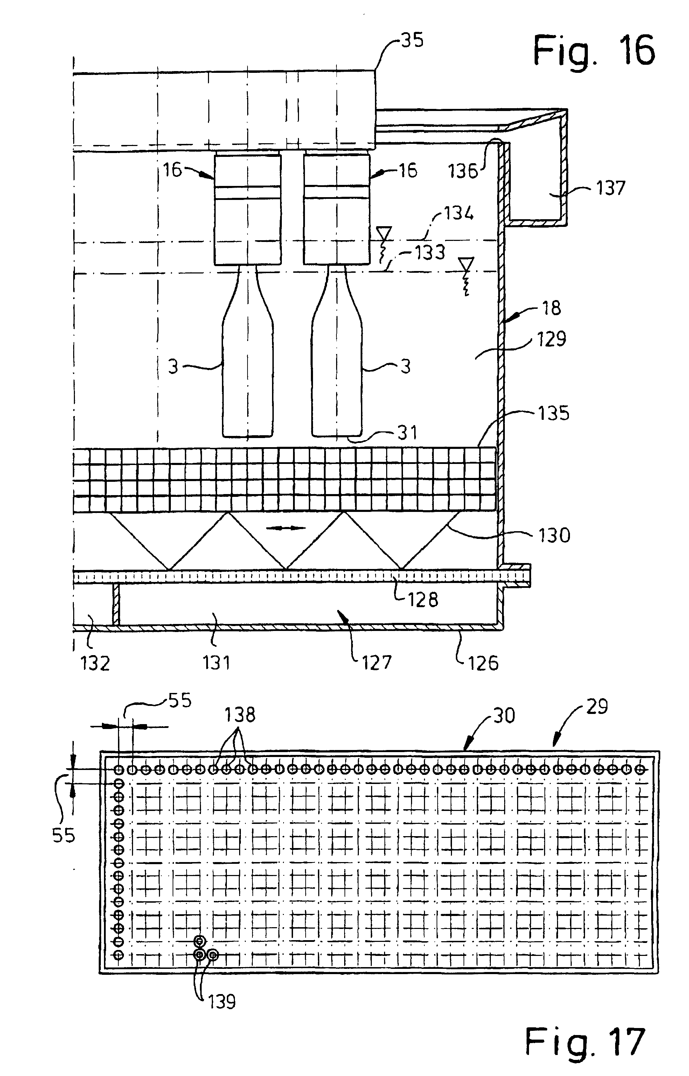

Ein Obertrum des Transportbands 22 läuft vorzugsweise ständig in einer Transportrichtung 23, normalerweise parallel zu der Transportrichtung 6 des Kühlofenbands 5. Vorzugsweise wird die Handhabungsvorrichtung 13 in dieser Abgabestellung oberhalb des Transportbands 22 nicht nur in senkrechter Richtung, sondern überlagert auch in der Transportrichtung 23 bewegt, während die Greifvorrichtung 12 passiviert wird und die Gruppe 10 an das Transportband 22 übergibt. Auf diese Weise werden die Glasbehälter 3 standsicher auf das Transportband 22 abgegeben. An dieser Abgabestelle kann eine nicht gezeichnete Absaugevorrichtung für überschüssig anhaftendes Beschichtungsmedium vorgesehen sein. Vor der Übernahme der Glasbehälter 3 kann das Transportband 22 in nicht gezeichneter Weise mit einem Trennmittel versehen werden, das ein Anhaften der Behälterböden 31 (Fig. 16) verringert oder verhindert.

Die von den Glasbehältern 3 entleerte Greifvorrichtung 12 wird auf einem vierten Niveau 24 in waagerechter Richtung, in Fig. 1 nach links, in eine Position oberhalb der Aufnahmestelle 11 zurücktransportiert und anschließend in senkrechter Richtung zu der Aufnahmestelle 11 hin abgesenkt, um eine neue Gruppe 10 zu übernehmen.

Alternativ kann die entleerte Greifvorrichtung 12 auf dem vierten Niveau 24 in waagerechter Richtung über die Aufnahmestelle 11 hinaus bis in eine Servicestation 25 zurücktransportiert werden. In der Servicestation 25 können nach Bedarf Servicehandlungen, wie die Kühlung der Greifvorrichtung 12, die Reinigung der Greifvorrichtung 12 von anhaftendem Beschichtungsmedium oder der Abwurf von Ausschußbehältern 26, vorgenommen werden. In der Servicestation 25 kann auch die bis dahin eingesetzte Greifvorrichtung durch eine neue Greifvorrichtung 12 ersetzt werden. Zwei solche neue Greifvorrichtungen 12 sind in Fig. 1 links von der Servicestation 25 in Wartestellung eingezeichnet.

Die von der Greifvorrichtung 12 übernommenen, beschichteten Gasbehälter 3 fördert das Transportband 22 in der Transportrichtung 23 in eine Aushärtezone 27, die als tunnelartiger Aushärteofen ausgebildet ist. In der Aushärtezone 27 wird die Pulverschicht auf den Glasbehältern 3 z.B. während 10 min bei ca. 180 bis 220° C ausgehärtet. Danach können die Glasbehälter auf etwa 80° C abgekühlt und noch mit einer an sich bekannten Kaltendvergütung versehen werden.

Die Vorrichtung 1 gemäß Fig. 1 bietet auch die alternative Möglichkeit, die Glasbehälter 3 auf Wunsch oder bei Störungen in der Pulverbeschichtungsanlage nicht mit Pulverlack zu beschichten. In diesem Fall bleibt die Greifvorrichtung 12 an der Aufnahmestelle 11 inaktiv, so daß die Glasbehälter 3, wie in Fig. 1 rechts unten angedeutet, auf dem Kühlofenband 5 weiterlaufen und dort mit einer an sich bekannten Beschichtungsvorrichtung 28 mit einer üblichen Kaltendvergütung versehen werden.

Das vierte Niveau 24 kann gleich dem ersten Niveau 17 gemacht werden.

In allen Zeichnungsfiguren sind gleiche Teile mit gleichen Bezugszahlen versehen.

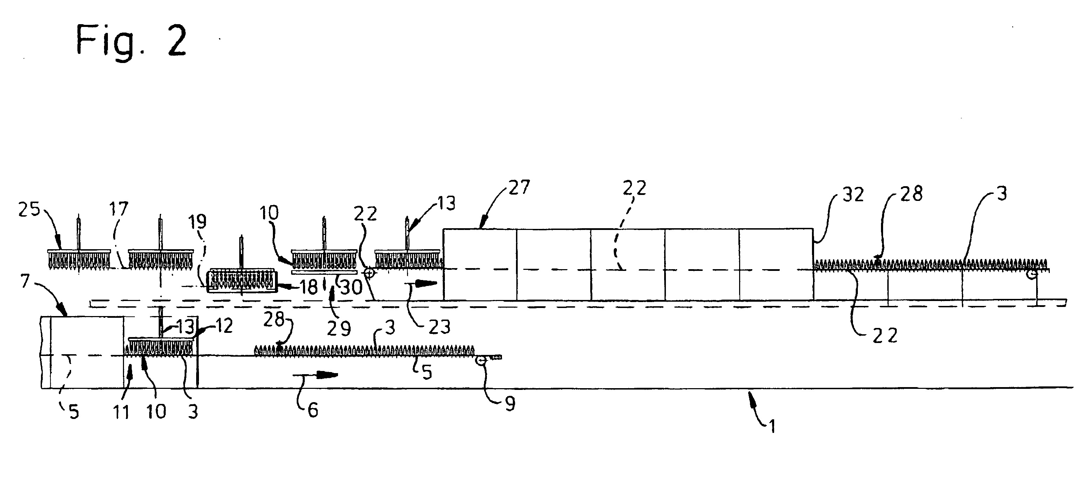

Bei dem Ausführungsbeispiel der Vorrichtung 1 nach Fig. 2 wird die Gruppe 10 der Glasbehälter 3 in der gleichen Weise an der Aufnahmestelle 11 von dem Kühlofenband 5 durch die Handhabungsvorrichtung 13 abgehoben, wie gemäß Fig. 1. Von dem ersten Niveau 17 wird die Gruppe 10 dann allerdings nicht nach links in Fig. 2, sondern nach rechts in waagerechter Richtung verfahren, bis sie oberhalb des Behälters 18 angelangt ist. Sodann wird die Gruppe 10 in der gleichen Weise in den Behälter 18 eingetaucht und aus diesem wieder ausgehoben, wie in Fig. 1. Nach dem Ausheben aus dem Beschichtungsmedium in dem Behälter 18 wird die Gruppe 10 in waagerechter Richtung nach rechts in Fig. 2 in eine Bodenaushärtezone 29 transportiert. In der ersten Bodenaushärtezone 29 ist unterhalb der Gruppe 10 ein Heizregister 30 stationär angeordnet. Mit dem Heizregister 30 wird im wesentlichen nur die Schicht 2 (Fig. 15) auf den Böden 31 (Fig. 16) der Glasbehälter 3 ausgehärtet. Dieses Aushärten dauert z.B. maximal 40 s und findet vorzugsweise auf dem ersten Niveau 17 (Fig. 1) statt.

Im Anschluß an die Bodenhärtung in der ersten Bodenaushärtezone 29 wird die Gruppe 10 durch die Handhabungsvorrichtung 13 in waagerechter Richtung nach rechts in Fig. 2 über das Transportband 22 transportiert. Die Gruppe 10 wird in der gleichen Weise auf dem Transportband 22 abgesetzt, wie dies zu Fig. 1 beschrieben wurde. Es folgt die Aushärtung des Rests der Schicht 2 (Fig. 15) in der Aushärtezone 27, die wiederum als tunnelartiger Aushärteofen ausgebildet ist. Nach einem hinteren Ende 32 der Aushärtezone 27 kühlen die beschichteten Glasbehälter 3 ab und werden schließlich durch die Beschichtungsvorrichtung 28 mit einer an sich bekannten Kaltendvergütung versehen.

Eine solche Kaltendvergütung kann analog zu Fig. 1 auch hinter der Aufnahmestelle 11 auf die Glasbehälter 3 aufgebracht werden, wenn diese ohne Pulverlackbeschichtung auf dem Kühlofenband 5 weiterlaufen.

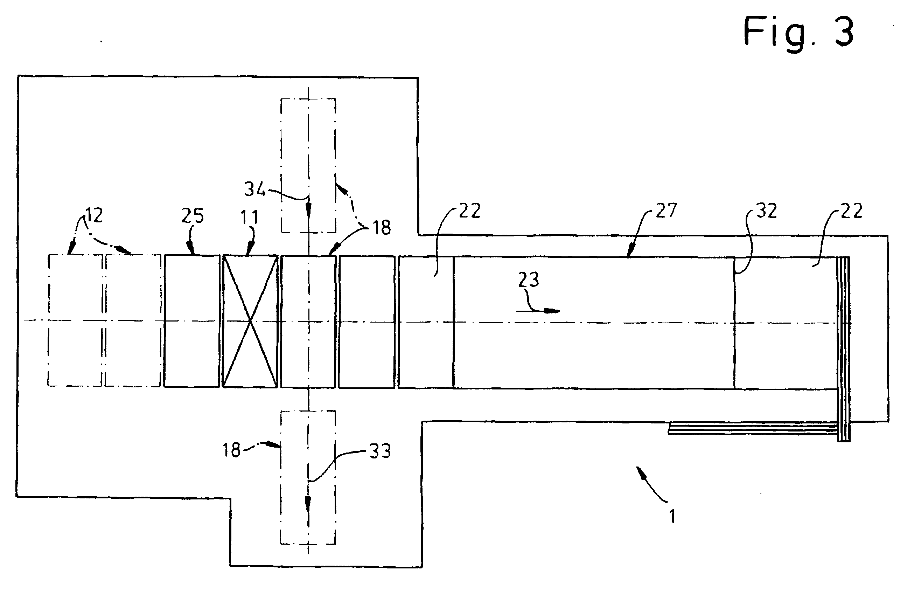

Fig. 3 zeigt eine Draufsicht auf die Vorrichtung 1 gemäß Fig. 2 in schematischer Darstellung. Wenn der Behälter 18 zu Reparatur- oder Wartungszwecken ausgetauscht werden soll, wird er in Richtung des Pfeils 33 seitlich aus seiner Betriebsposition herausbewegt. Ein frischer, betriebsbereiter Behälter 18 wird sodann in Richtung des Pfeils 34 von der gegenüberliegenden Seite her in die vollausgezogene Betriebsposition gebracht. So kann der Wechsel des Behälters 18 mit geringstmöglicher Verlustzeit vonstatten gehen.

Fig. 4 zeigt die Ansicht von unten auf die Greifvorrichtung 12. Man erkennt, wie in diesem Fall 600 Greifeinheiten 16 matrixartig in Spalten 4 und Reihen 14 an dem Träger 15 angeordnet sind. Bestandteile des Trägers 15 sind rohrförmige Traversen 35, von denen in Fig. 4 nur eine gezeichnet ist. Je eine dieser Traversen 35 ist einer Spalte 4 von in diesem Fall 15 Greifeinheiten 16 zugeordnet und trägt diese Greifeinheiten 16. Der Träger 15 weist in dem Ausführungsbeispiel nach Fig. 4 in seiner Längsmitte eine Teilung 36 auf. Die Teilung 36 dient dazu, die beiden dadurch geschaffenen Hälften der Greifvorrichtung 12 in den Richtungen des Doppelpfeils 37 etwas auseinanderzufahren, bevor jede Hälfte der Greifvorrichtung 12 in in diesem Fall einen gesonderten Behälter (nicht dargestellt) mit Beschichtungsmedium abgesenkt wird. Diese beiden Behälter stoßen mit ihren Stirnwänden aneinander oder haben eine gemeinsame Stirnwand, so daß die beiden Hälften der Greifvorrichtung 12 nur so weit auseinanderbewegt werden müssen, daß die Trennwand zwischen den beiden Behältern durch die beiden Hälften passiert werden kann. Nach dem Ausheben der beiden Hälften der Greifvorrichtung 12 aus den Wirbelsinterbetten werden die Hälften der Greifvorrichtung 12 wieder zusammengefahren, so daß sie sich in der Teilung 36 berühren und für den Weitertransport verriegelt sind. Der Träger 15 kann in ähnlicher Weise auch mehr als eine solche Teilung 36 aufweisen. Entsprechend wächst dann die Anzahl der Behälter 18.

Fig. 5 zeigt Einzelheiten der Greifvorrichtung 12 und insbesondere einer der in gleicher Weise ausgebildeten Greifeinheiten 16.

Jede Greifeinheit 16 weist ein Basisteil 38 auf, an dem in diesem Fall vier Greifelemente 39 jeweils um eine Achse 40 heb- und senkbar gelagert sind. Jedes Greifelement 39 ist mit einem sich zur Längsachse 41 der Greifeinheit 16 hin erstreckenden Betätigungsarm 42 versehen. Jeder Betätigungsarm 42 weist an seinem freien Ende einen Kugelkopf 43 auf, der in eine sich radial nach außen öffnende Nut eines Betätigungsrings 44 eingreift. Der Betätigungsring 44 ist durch eine Mutter 45 an einer Kolbenstange 46 eines Kolbens 47 einer Kolben-Zylinder-Einheit 48 festgelegt. Der Kolben 47 gleitet in einem Zylinder 49, der in einem oberen Kolbenteil 50 des Basisteils 38 ausgebildet ist. Alternativ können die Greifelemente in nicht gezeichneter Weise auch linear zwischen ihrer Greif- und Freigabeposition bewegbar sein.

Jedes Greifelement 39 ist segmentartig ausgebildet und wirkt in einer in Fig. 5 gezeigten Greifposition mit den übrigen Greifelementen 39 längs Fugen 51 und dem zugehörigen Glasbehälter 3 abdichtend zusammen. Am unteren Ende trägt jedes Greifelement 39 einen eingeschraubten Greifeinsatz 52, der sich in der Greifposition gemäß Fig. 5 formschlüssig und abdichtend unter und an ein Sicherungsband 53 der Mündung 20 legt. Oberhalb des umlaufenden Sicherungsbands 53 weist jede Mündung 20 in der üblichen Weise ein Außengewinde 54 zur Befestigung einer nicht gezeichneten Verschlußkappe auf. Die Greifeinsätze 52 liegen in den Ebenen der Fugen 51 außerdem in Umfangsrichtung abdichtend aneinander an, wenn sich die Greifelemente 39 in der in Fig. 5 gezeichneten Greifposition befinden.

Die Anordnung von drei und mehr Greifelementen 39 je Greifeinheit 16 hat einen besonderen Vorteil. Wenn nämlich die Mündung 20 des zugehörigen Glasbehälters 3 nicht konzentrisch mit der Längsachse 41 der Greifeinheit 16 angeordnet ist, bevor die Mündung 20 durch die Greifelemente ergriffen wird, kann innerhalb vorgegebener Toleranzen eine Zentrierung der Mündung 20 auf die Längsachse 41 durch die Greifelemente 39 erfolgen. Der besondere Vorteil ist, daß dies bei drei und mehr Greifelementen 39 für Exzentrizitäten der Mündung 20 in jeder beliebigen radialen Richtung gilt. Solche Exzentrizitäten können mehrere Gründe haben. Zum einen kann der an sich gerade Glasbehälter 3 schon mit seinem Boden 31 (Fig. 16) exzentrisch positioniert sein. Zum anderen kann aber auch ein mit dem Boden exakt positionierter Glasbehälter 3 schief sein, so daß seine Mündung 20 von der idealen konzentrischen Position abweicht. Zur Berücksichtigung solcher Umstände weist die Matrix gemäß Fig. 4 in beiden Koordinaten ein ausreichend großes Rastermaß 55 von z.B. 128 mm auf.

In Fig. 5 ist die Kolbenstange 46 in einer Bohrung 56 des Basisteils 38 durch eine Führungsbuchse 57 in radialer Richtung geführt. Zwischen dem Basisteil 38 und dem Kolben 47 ist eine die Greifelemente 39 in ihre Greifposition vorspannende Feder 58 angeordnet.

Der obere Kolbenteil 50 ist unter Bildung einer Zylinderkammer 59 in einem Hauptzylinder 60 verschiebbar und durch Dichtungen 61 abgedichtet geführt. Zwischen dem oberen Kolbenteil 50 und dem Hauptzylinder 60 ist eine den oberen Kolbenteil 50 in eine in Fig. 5 gezeichnete Tiefststellung vorspannende Feder 62 angeordnet. Diese Tiefststellung ist definiert durch einen Zapfen 63 des Basisteils 38, der in einem unteren Ende 64 eines Längsschlitzes 65 anliegt. Der Längsschlitz 65 ist Bestandteil einer eine schnelle Montage und Demontage der Greifeinheit 16 gestattenden Bajonettkulisse 66 (siehe auch Fig. 15) für den Zapfen 63. Die Bajonettkulisse 66 ist in einer Seitenwand 67 einer Tasse 68 ausgebildet, die an einen unteren Fortsatz 69 der Traverse 35 angeschraubt ist.

Die Kolbenstange 46 weist eine konzentrische Durchbrechung 70 auf, durch die hindurch sich eine weitere Kolbenstange 71 erstreckt. Ein freies, oberes Ende 72 der weiteren Kolbenstange 71 ist durch eine Mutter 73 an dem oberen Kolbenteil 50 des Basisteils 38 festlegbar. Ein unteres Ende 74 der weiteren Kolbenstange 71 trägt auf der Höhe der Greifelemente 39 einen weiteren Kolben 75. Auf dem weiteren Kolben 75 und der weiteren Kolbenstange 71 ist ein weiterer Zylinder 76 verschiebbar geführt, der unten einen Stopfen 77 trägt. Der Stopfen 77 wirkt entweder mit der Mündung 20 des Glasbehälters 3 in der aus Fig. 5 ersichtlichen Weise zusammen, oder der Stopfen 77 sitzt abdichtend in der mittleren Öffnung 78 der Greifeinsätze 52, wenn die Greifelemente 39 sich in ihrer in Fig. 5 gezeichneten Greifstellung befinden, jedoch kein Glasbehälter 3 gegriffen wurde. Es kann vorkommen, daß in der Matrix einer Gruppe 10 der Glasbehälter 3 hier und da Glasbehälter 3 fehlen. In diesem Fall sorgt der Stopfen 77 dafür, daß Beschichtungsmedium nicht in einen Innenraum 79 der zugehörigen Greifelemente 39 gelangt.

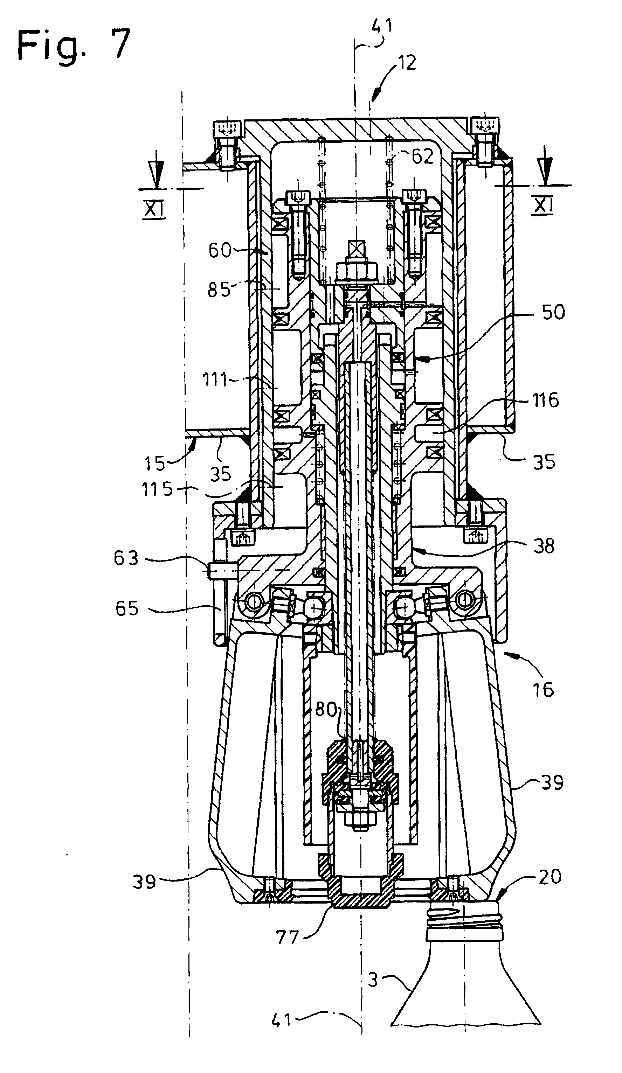

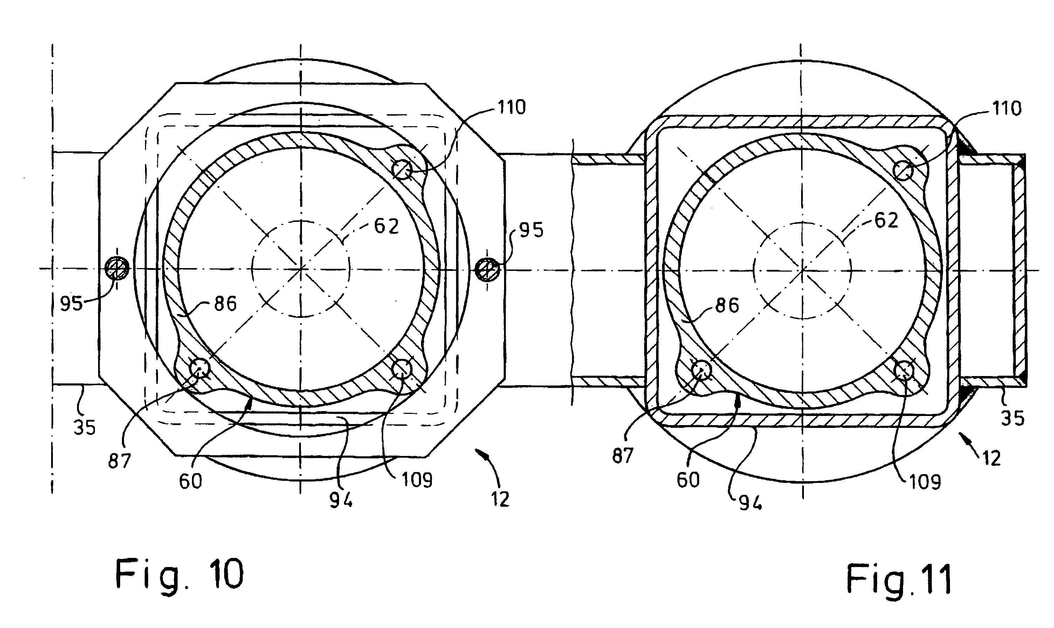

Zwischen dem weiteren Zylinder 76 und der weiteren Kolbenstange 71 ist eine den Stopfen 77 in eine in Fig. 7 gezeichnete Tiefststellung vorspannende Feder 80 angeordnet. Die weitere Kolbenstange 71 weist einen Hohlraum 81 auf, durch den zum Heben des weiteren Zylinders 76 Druckluft auf eine obere Seite 82 des weiteren Kolbens 75 geleitet werden kann. Diese Druckluft kommt über einen Verbindungskanal 83 aus einem Ringraum 84 des oberen Kolbenteils 50. Der Ringraum 84 steht über eine in Fig. 5 nur schematisch angedeutete Öffnung 85 in einer Seitenwand 86 des Hauptzylinders 60 in ständiger Verbindung mit einem achsparallelen Anschlußkanal 87 (Fig. 10 und 11) in der Seitenwand 86. Bei Entlüftung des Hohlraums 81 wird der Stopfen 77 durch die Kraft der Feder 80 in seine Tiefststellung zurückgeführt.

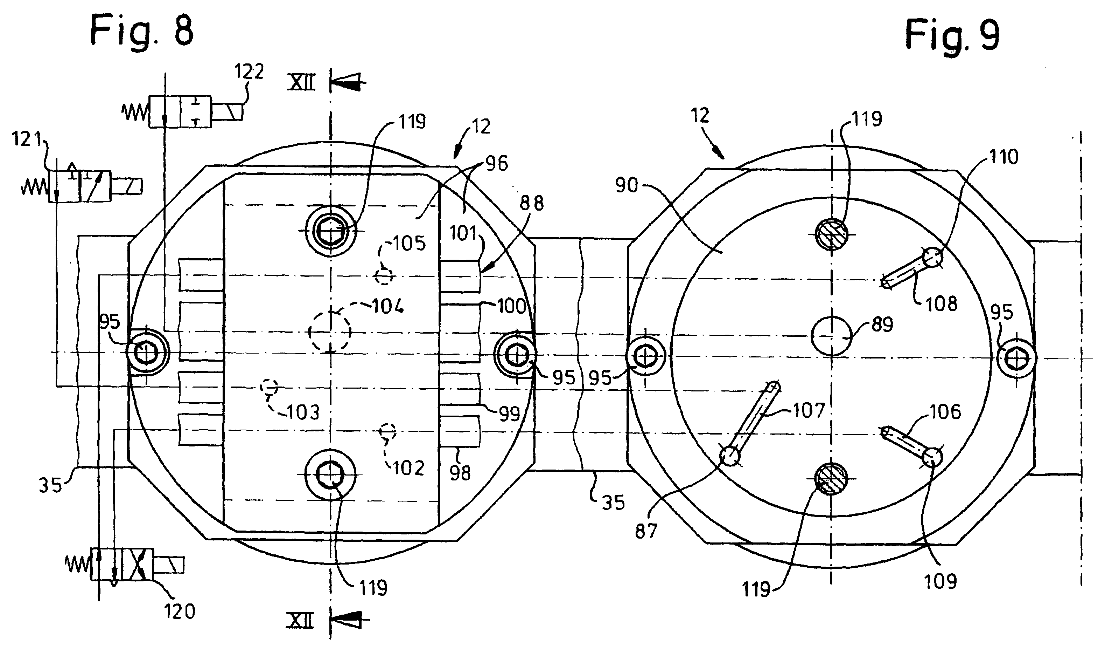

In die Zylinderkammer 59 ist ein unter erhöhtem Druck stehendes Spülgas, insbesondere Spülluft, einleitbar. Das Spülgas gelangt aus einer Versorgungsvorrichtung 88 durch eine Bohrung 89 (Fig. 9) in einer oberen Stirnwand 90 des Hauptzylinders 60 in die Zylinderkammer 59. Aus der Zylinderkammer 59 gelangt das Spülgas durch z.B. sechs über den Umfang verteilte Kanäle 91 in dem oberen Kolbenteil 50 in die Durchbrechung 70 der Kolbenstange 46 und von dort in den Innenraum 79 der Greifelemente 39. Bei Bedarf ist in dem Innenraum 79 außerhalb des weiteren Zylinders 76 eine Leithülse 92 angeordnet, welche die Spülluft nach unten hin auf die Mündung 20 und den Dichtungsbereich zwischen der Mündung 20 und den Greifeinsätzen 52 leitet. Die Leithülse 92 ist mit Madenschrauben 93 an der Mutter 45 festgelegt. Durch die Spülluft entsteht in dem Innenraum 79 ein gewisser Überdruck gegenüber der Umgebung. Dadurch wird das Eindringen von Beschichtungspulver in den Innenraum 79 erschwert oder unterbunden.

Der Hauptzylinder 60 ist in ein im wesentlichen quadratisches Aufnahmerohr 94 der Traverse 35 eingesetzt. Die Stirnwand 90 ist radial außen durch Schrauben 95 an der Traverse 35 festgelegt.

Die Versorgungsvorrichtung 88 weist für jede Greifeinheit 16 eine Brücke 96 auf. Durch jede Brücke 96 hindurch erstrecken sich in waagerechter Richtung vier zueinander parallele Bohrungen 97, in die jeweils eine rohrförmige Leitung 98 bis 101 (Fig. 8 und 12) dicht eingelötet ist. Jede der Leitungen 98 bis 101 ist von der Unterseite der Brücke 96 her mit einer Verbindungsbohrung 102 bis 105 (siehe auch Fig. 8 und 12) angebohrt. Die Verbindungsbohrung 104 fluchtet mit der Bohrung 89 (Fig. 9). Die Verbindungsbohrungen 102, 103 und 105 (siehe auch Fig. 8) fluchten jeweils mit einem in der Stirnwand 90 ausgebildeten Stichkanal 106 bis 108 (siehe auch Fig. 9). Der Stichkanal 106 mündet in einen achsparallelen Anschlußkanal 109 (Fig. 9 bis 11), der Stichkanal 107 mündet in den Anschlußkanal 87, und der Stichkanal 108 mündet in einen achsparallelen Anschlußkanal 110 (Fig. 9 bis 11).

Der Anschlußkanal 109 ist über eine in Fig. 5 nur schematisch angedeutete Öffnung 111 in der Seitenwand 86 ständig mit einem Ringraum 112 in dem oberen Kolbenteil 50 verbunden. Der Ringraum 112 steht über einen Verbindungskanal 113 in ständiger Verbindung mit einem Zylinderraum 114 oberhalb des Kolbens 47.

Der Anschlußkanal 110 steht über eine in Fig. 5 nur schematisch angedeutete Öffnung 115 in der Seitenwand 86 nur dann in Verbindung mit einem Ringraum 116 in dem oberen Kolbenteil 50, wenn sich das Basisteil 38 in seiner in Fig. 5 gezeichneten Tiefststellung befindet. Der Ringraum 116 steht über einen Verbindungskanal 117 in ständiger Verbindung mit einem Zylinderraum 118 auf der Unterseite des Kolbens 47. Durch die axial verhältnismäßig kurze Ausbildung des Ringraums 116 ist sichergestellt, daß dann, wenn das Basisteil 38 sich nicht in seiner Tiefststellung befindet, keine Druckkraft aufgrund von Druckmedium auf die Unterseite des Kolbens 47 ausgeübt wird.

Zwischen jede Brücke 96 und die zugehörige Stirnwand 90 ist eine zur Vereinfachung in den Zeichnungen nicht dargestellte Flachdichtung gelegt, die durch Schrauben 119 (Fig. 8, 9 und 12) in Position gehalten wird. Die Schrauben 119 durchdringen die Brücke 96 und sind in Gewindebohrungen der Stirnwand 90 eingedreht (Fig. 12).

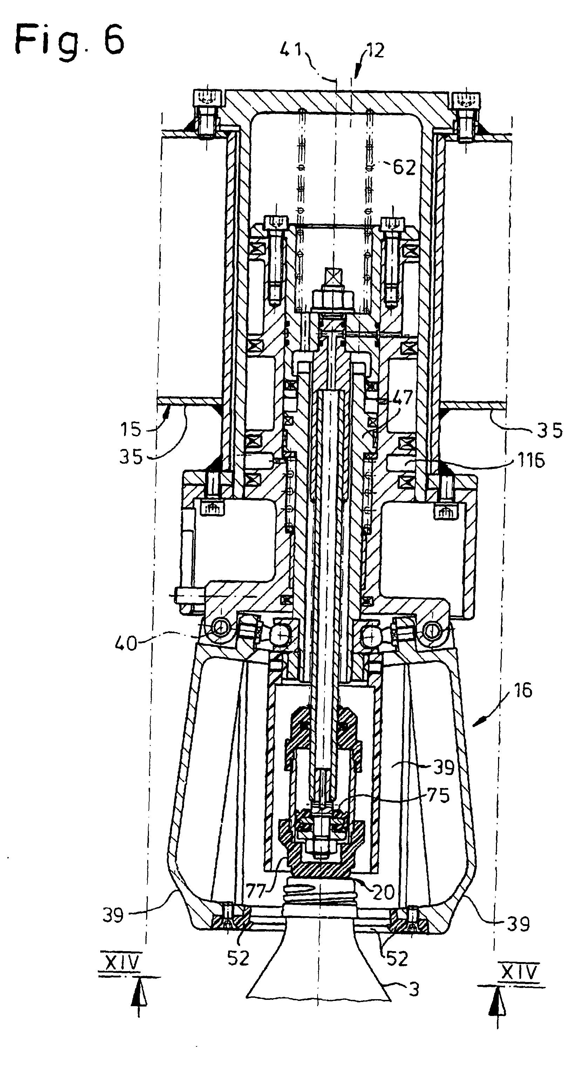

Fig. 6 zeigt eine Greifeinheit 16 mit den Greifelementen 39 in ihrer Freigabeposition. Diese Freigabeposition nehmen die Greifelemente ein, bevor die Glasbehälter 3 vom Kühlofenband 5 abgenommen werden, und später, wenn die Glasbehälter 3 auf dem Transportband 22 abgesetzt werden. Der Stopfen 77 sitzt in Fig. 6 auf der Mündung 20 und dichtet das Innere des Glasbehälters 3 gegen das Eindringen von Fremdkörpern, z.B. des Beschichtungspulvers, ab. Dabei ist der Stopfen 77 relativ zu dem weiteren Kolben 75 nach oben verschoben worden. Sollen die Greifelemente 39 aus der in Fig. 6 gezeigten Freigabestellung den Glasbehälter 3 greifen, wird Druckluft in den Ringraum 116 eingeleitet, wodurch der Kolben 47 nach oben gefahren wird und damit die Greifelemente 39 um die Achsen 40 absenkt, bis die Greifeinsätze 52 dichtenden und formschlüssigen Kontakt mit dem Glasbehälter 3 gemacht haben.

In Fig. 7 ist ein wiederum anderer Betriebszustand der Greifeinheit 16 dargestellt. Hier befindet sich der Stopfen 77 in seiner durch die Feder 80 verursachten Tiefststellung, ohne daß er in Berührung mit der Mündung des Glasbehälters 3 getreten wäre. Der Glasbehälter 3 steht in diesem Fall jedoch nicht koaxial zu der Längsachse 41. Dies hat dazu geführt, daß beim Absenken der Greifvorrichtung 12 das in der Freigabestellung befindliche rechte Greifelement 39 bestimmungswidrig auf der Mündung 20 aufgesetzt hat. Beim weiteren Absenken der Greifvorrichtung 12 hat sich sodann das Basisteil 38 mit seinem oberen Kolbenteil 50 weiter in den Hauptzylinder 60 gegen die Kraft der Feder 62 eingeschoben. Die Verbindung von der Öffnung 115 in den Ringraum 116 wurde dabei unterbrochen, so daß das Druckmedium nicht in der Lage ist, die Greifelemente 39 in ihre Greifposition zu schließen, wenn die Greifelemente 39 der übrigen Greifeinheiten 16 zum Ergreifen ihrer Glasbehälter 3 geschlossen werden.

Fig. 8 zeigt jeweils ein Stück der Leitungen 98 bis 101, die sich über die gesamte Länge der zugehörigen Traverse 35 erstrecken. Die Leitungen 98 und 101 sind in der in Fig. 8 angedeuteten Weise an ein Wegeventil 120 angeschlossen. Die Leitung 99 ist mit einem Wegeventil 121 verbunden und die Leitung 100 mit einem Wegeventil 122.

Die Fig. 9 bis 12 zeigen Einzelheiten der Greifvorrichtung 12, auf die zum Teil zuvor schon Bezug genommen wurde.

Fig. 13 zeigt eine andere Ansicht der in ihrer Greifposition befindlichen Greifelemente 39.

Fig. 14 stellt die Verhältnisse dar, wenn die Greifelemente 39 sich in ihrer Freigabeposition befinden. Dann besteht zwischen benachbarten Greifelementen 39 jeweils ein Abstand 123, der kleiner als der Durchmesser der Mündung 20 (Fig. 5) ist. So kann also die Mündung 20 beim Schließen der Greifelemente 39 in ihre Greifposition nicht durch die Zwischenräume zwischen den Greifelementen 39 ausweichen, sondern wird, wenn die Mündung 20 von vornherein exzentrisch zu der Längsachse 41 angeordnet ist, während des Schließens der Greifelemente 39 auf die Längsachse 41 zentriert.

Fig. 15 zeigt weitere Einzelheiten der Bajonettkulisse 66. Innerhalb des Längsschlitzes 65 ist strichpunktiert die oberste Betriebsstellung des Zapfens 63 eingetragen, die dieser in dem besonderen Betriebsfall gemäß Fig. 7 einnimmt. Dadurch ist ein Betriebshub 124 für den Zapfen 63 definiert, der voll in dem Längsschlitz 65 liegt, jedoch nicht in die Bajonettkulisse 66 gerät. Unbeabsichtigtes Lösen des Basisteils 38 von dem Hauptzylinder 60 ist daher ausgeschlossen.

Aus Fig. 15 ist auch ersichtlich, daß die in ihre Greifposition geschlossenen Greifelemente 39 allseitig einen radialen Überstand 125 von z.B. 5 mm gegenüber dem Glasbehälter 3 aufweisen.

Die Schicht 2 auf dem Glasbehälter 3 ist in Fig. 15 übertrieben dick dargestellt. Die Schicht 2 ist zumindest annähernd duroplastisch und aus einem Pulver entstanden, das einen Bestandteil aus härtbaren Harzen und einen Härterbestandteil aufweist. Mit einer solchen Schicht ist optimaler Schutz der jungfräulichen oder schon mit einer Heißendvergütung versehenen Glasoberfläche gewährleistet. Dieser Schutz besteht vor allem gegenüber mechanischen Beschädigungen. Unter diesem Schutz ist es möglich, die Wanddicke des Glasbehälters zu verringern, ohne dabei Einbußen an den Festigkeitswerten des fertigen Verpackungsbehälters hinnehmen zu müssen.

Fig. 16 zeigt Einzelheiten des Behälters 18, der, ausgehend von seinem Boden 126, in dieser Reihenfolge eine Luftkammer 127, eine poröse Platte 128 und eine in dem Pulver 129 bewegbare Auflockerungseinrichtung 130 aufweist. Der Luftraum 127 ist zur gleichmäßigen Durchströmung des Pulvers 129 mit Druckluft in Zellen 131, 132 unterteilt. Das Pulver bildet mit der aus dem Luftraum 127 zugeführten Druckluft ein Mirlbelsinterbett, dessen minimale Spiegelhöhe 133 und maximale Spiegelhöhe 134 in Fig. 16 mit strichpunktierten Linien eingetragen sind. Ideal wird die Spiegelhöhe zumindest annähernd konstant gehalten und durch Steuerung des Antriebes der Handhabungsvorrichtung 13 dafür gesorgt, daß die Greifeinheiten 16, unabhängig von der Anzahl der durch die Greifvorrichtung 12 in jedem Betriebszyklus gegriffenen Glasbehälter 3, zumindest annähernd gleich tief und möglichst wenig in das Pulver 129 eintauchen.

Oberhalb der Auflockerungseinrichtung 130 ist ein aus dem Pulver 129 aushebbarer Scherbenkorb 135 angeordnet. Entlang eines oberen Randes 136 jedes Behälters 18 ist ein zum Wirbelsinterbett hin offener Absaugkanal 137 angeordnet.

Fig. 17 zeigt Einzelheiten zweier Ausführungsformen des Heizregisters 30 gemäß Fig. 2. In dem gleichen Rastermaß 55 wie bei der Greifvorrichtung 12 gemäß Fig. 4 sind in Fig. 17 unterhalb des Bodens 31 (Fig. 16) jedes Glasbehälters 3 Heizvorrichtungen 138 oder 139 angeordnet. Bei den Heizvorrichtungen 138 handelt es sich um durch elektrische Widerstandsheizung beheizbare kreisförmige Heizteller. Die Heizvorrichtungen 139 stellen ringförmige Gasbrenner dar.

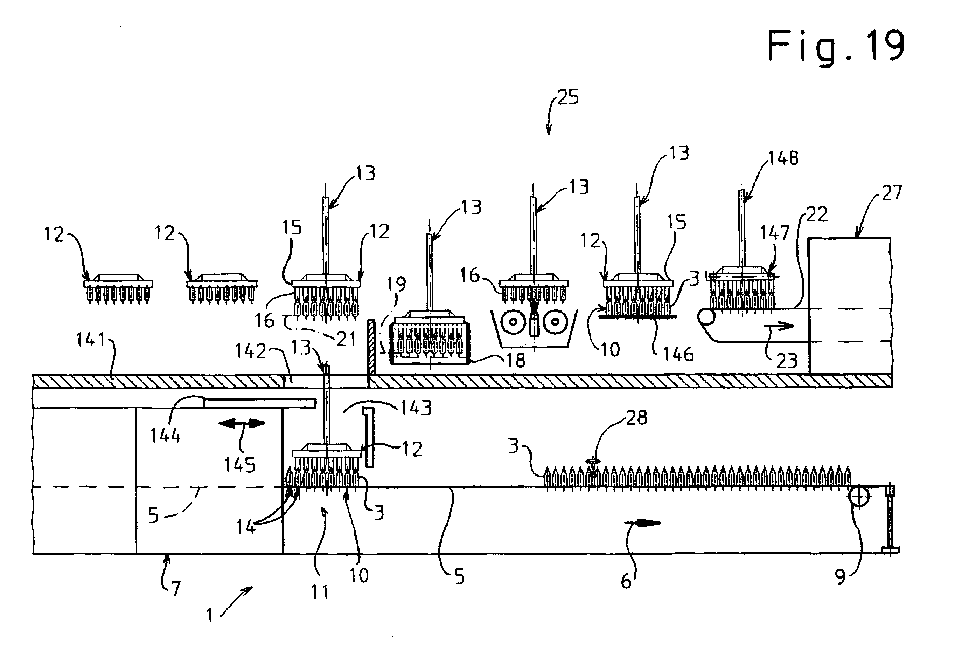

Fig. 18 zeigt ein Detail einer möglichen Ausführungsform des Transportbands 22. Das Transportband 22 besteht in diesem Fall aus Maschendraht, der vergleichsweise kleine und zahlreiche, mit den beschichteten Böden 31 der Glasbehälter 3 in Berührung tretende Tragbereiche 140 aufweist.

Bei dem Ausführungsbeispiel der Vorrichtung 1 gemäß Fig. 19 ist an der Aufnahmestelle 11 eine Zwischenbühne 141 mit einer Durchbrechung 142 versehen, durch die hindurch die Handhabungsvorrichtung 13 mit ihrer Greifvorrichtung 12 zur Aufnahme der Gruppe 10 der Glasbehälter 3 abgesenkt und mit der Gruppe 10 wieder angehoben werden kann. Der Kühlofen 7 weist in senkrechter Fluchtung mit der Durchbrechung 142 einen Deckenauslaß 143 auf. Der Deckenauslaß 143 kann zur Einsparung von Heizenergie und zur Aufrechterhaltung möglichst konstanter Temperaturverhältnisse an der Aufnahmestelle 11 durch eine Abdeckplatte 144 so weit und so lange wie möglich verschlossen werden. Die Abdeckplatte 144 ist dazu in den Richtungen eines Doppelpfeils 145 verschiebbar.

Aus der Aufnahmestelle 11 wird die Handhabungsvorrichtung 13 mit der Gruppe 10 senkrecht bis auf das dritte Nievau 21 angehoben und sodann in waagerechter Richtung nach rechts bis über den das Beschichtungsmedium enthaltenden Behälter 18 gefahren. Sodann wird die Einheit 13, 12 abwärts gefahren, bis die Gruppe 10 bis zu dem zweiten Niveau 19 in dem Behälter 18 eintaucht. Nach genügender Anlagerung des Beschichtungsmediums an die Glasbehälter 3 wird die Einheit 13, 12 wieder senkrecht angehoben und dann in waagerechter Richtung bis über eine Absetzplatte 146 gefahren. Dieses waagerechte Verfahren kann auf dem dritten Niveau 21 oder auf einem anderen Niveau geschehen. Zum Beispiel steht hierfür ein höheres Niveau dann zur Verfügung, wenn zwischen dem Behälter 18 und der Absetzplatte 146, wie in Fig. 19 dargestellt, die verhältnismäßig hoch angeordnete Servicestation 25 vorgesehen ist.

Über der Absetzplatte 146 angelangt, wird die Einheit 13, 12 mit der Gruppe 10 senkrecht nach unten abgesenkt. Sodann werden die Greifeinheiten 16 der Greifvorrichtung 12 passiviert, so daß sie die Glasbhälter 3 der Gruppe 10 freigeben und auf der Absetzplatte 146 abstellen.

Die so entleerte Einheit 13, 12 wird senkrecht nach oben und dann in Fig. 19 nach links über die Servicestation 25 bewegt. Dort wird die Greifvorrichtung 12 gereinigt, bevor die Einheit 13, 12, vorzugsweise auf dem dritten Niveau 21, weiter nach links über die Aufnahmestelle 11 bewegt wird, wo der Zyklus von neuem beginnt.

Die zuvor auf der Absetzplatte 146 abgestellte Gruppe 10 wird jetzt durch eine andere Greifvorrichtung 147 ergriffen. Die andere Greifvorrichtung 147 wird durch eine andere Handhabungsvorrichtung 148 getragen und kann grundsätzlich einfacher als die Greifvorrichtung 12 ausgebildet sein. Dies wird dadurch möglich, daß an der anderen Greifvorrichtung 147 im wesentlichen keine Reste des Beschichtungsmediums haften können. Vorzugsweise wird die andere Greifvorrichtung 147 in waagerechter Richtung über die Absetzplatte 146 bewegt, dann in senkrechter Richtung zu der Gruppe 10 hin abgesenkt, mit der Gruppe 10 wieder senkrecht nach oben gefahren und sodann, wie in Fig. 19 eingezeichnet, nach rechts in waagerechter Richtung über das Transportband 22 bewegt. Dort wird die andere Greifvorrichtung 147 passiviert, so daß die Gruppe 10 auf das Transportband 22 abgegeben wird. Die andere Greifvorrichtung 147 wird sodann vorzugsweise senkrecht nach oben und waagerecht nach links bis zurück über die Absetzplatte 146 bewegt, sobald dort durch die Einheit 13, 12 wieder eine neue Gruppe 10 abgesetzt und die Einheit 13, 12 wieder entfernt worden ist. Zwischen der Absetzplatte 146 und dem Transportband 22 kann die Einheit 148, 147 mit der daran hängenden Gruppe 10 auch noch eine Bodenaushärtezone entsprechend der Bodenaushärtezone 29 in Fig. 2 anfahren.

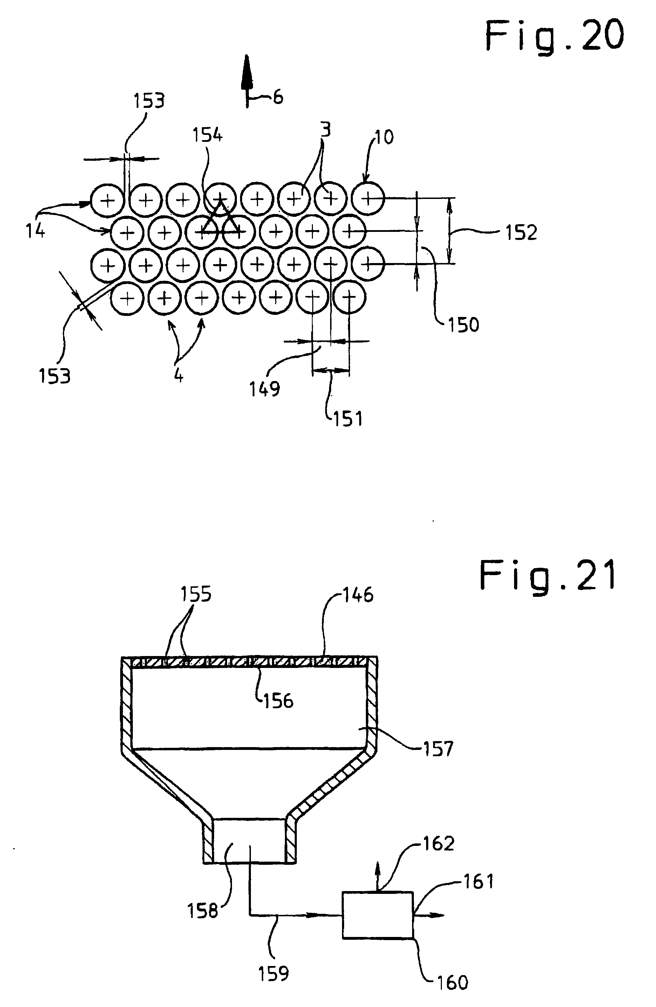

Fig. 20 zeigt ein besonderes Stellschema der Glasbehälter 3 der Gruppe 10. In diesem Stellschema werden die Glasbehälter 3 auf dem Kühlofenband 5 angeliefert. Benachbarte Reihen 14 und Spalten 4 sind in diesem Stellschema jeweils um eine halbe Teilung 145;150 gegeneinander versetzt. Die Teilungen selbst sind in Fig. 20 mit 151 und 152 bezeichnet. Jeder Glasbehälter 3 der Gruppe 10 weist einen gleichgroßen Abstand 153 von allen benachbarten Glasbehältern 3 der Gruppe 10 auf. Dies wird bei Glasbehältern 3 mit kreisrundem Querschnitt dadurch erreicht, daß die Längsachsen jeweils drei benachbarter Glasbehälter 3 an den Ecken eines gleichseitigen Dreiecks 154 angeordnet sind.

Gemäß Fig. 21 ist die Absetzplatte 146 mit Durchbrechungen 155 versehen. Eine Unterseite 156 der Absetzplatte 146 ist mit einer mit Unterdruck beaufschlagbaren Kammer 157 verbunden. Wenn sich beim Abstellen einer Gruppe 10 der Glasbehälter 3 auf der Absetzplatte 146 Teile des Beschichtungsmediums lösen sollten, werden diese durch die Durchbrechungen 155 abgesaugt und gelangen durch einen Auslaß 158 der Kammer 157 über eine Leitung 159 in eine Abscheidevorrichtung 160. Aus einem Auslaß 161 der Abscheidevorrichtung 160 wird dann das abgeschiedene Beschichtungsmedium ausgetragen und möglichst wiederverwertet. Aus einem weiteren Auslaß 162 der Abscheidevorrichtung 160 entweicht gereinigte Trägerluft.

Nachfolgend werden einige Beispiele für das Verhältnis V = (Glasmasse des erfindungsgemäß beschichteten Glasbehälters (3)) : (Glasmasse eines das gleiche Füllvolumen und das gleiche Füllgut aufweisenden, aber unbeschichteten oder nur mit einer Heißendvergütung und einer Kaltendvergütung versehenen Glasbehälters nach dem Stand der Technik) aufgeführt:
0,33 l - Bierflasche mit ca. 5 g CO₂/l V = 100 g/130g = 0,77
0,5 l - Bierflasche mit ca. 5 g CO₂/l V = 130 g/180 g = 0,72
0,33 l - Limonaden- oder Mineralwasserflasche mit ca. 8 g CO₂/l V = 115 g/145 g = 0,79
1,0 l - Limonaden- oder Mineralwasserflasche mit ca. 8 g CO₂/l V = 290 g/400 g = 0,73
0,75 l - Sektflasche mit ca. 10 bis 12 g CO₂/l V = 450 g/550 g = 0,82
Flaschen für Wein oder stilles Wasser mit bis zu 4 g CO₂/l:
0,75 l - Weinflasche V = 240 g/330 g = 0,73
1,0 l - Weinflasche V = 250 g/350 g = 0,72
1,0 l - Flasche für stilles Wasser V = 250 g/290 g = 0,86
1,5 l - Flasche für stilles Wasser V = 380 g/480 g = 0,79
16 U.S. fluid ounces (= 474 ml) - Softdrinkflasche V = 130 g/180 g = 0,72
12 U.S. fluid ounces (= 355 ml) - Bierflasche für Kaltabfüllung (ohne Pasteurisation bei bis zu 68° C) V = 120 g/195 g = 0,62
500 ml - Softdrinkflasche V = 130 g/180 g = 0,72
12 U.S. fluid ounces (= 355 ml) - Softdrinkflasche V = 115 g/160 g = 0,72
13 U.S. fluid ounces (= 381 ml) - Bierflasche für Kaltabfüllung V = 130 g/210 g = 0,62.

## Patentansprüche

1. Verfahren zur Aufbringung einer Schicht (2) auf zumindest einen Teil der Außenfläche von Glasbehältern (3),
mit folgenden Schritten:
(a) Die Glasbehälter (3) werden auf eine für die Beschichtung geeignete Temperatur oberhalb der Raumtemperatur gebracht,
(b) jeweils eine Gruppe (10) der Glasbehälter (3) wird an einer Aufnahmestelle (11) durch Aktivieren einer Greifvorrichtung (12) gegriffen, auf ein erstes Niveau (17) angehoben, über einen ein Beschichtungsmedium (129) enthaltenden Behälter (18) transportiert und ganz oder teilweise auf ein zweites Niveau (19) in das Beschichtungsmedium (129) abgesenkt, bis Beschichtungsmedium (129) in der gewünschten Weise an den Glasbehältern (3) haftet,
(c) jede Gruppe (10) der beschichteten Glasbehälter (3) wird aus dem Beschichtungsmedium (129) heraus auf ein drittes Niveau (21) angehoben und weitertransportiert,
(d) die Greifvorrichtung (12) wird nachfolgend passiviert, wodurch die Gruppe (10) der Glasbehälter (3) von der Greifvorrichtung (12) abgegeben wird,
(e) jede Gruppe (10) der beschichteten Glasbehälter (3) wird auf ein Transportband (22) abgegeben und durch das Transportband (22) durch eine Aushärtezone (27) transportiert, in welcher Aushärtezone (27) zumindest ein Teil der Schicht (2) der Glasbehälter (3) ausgehärtet wird, und
(f) die von den Glasbehältern (3) entleerte Greifvorrichtung (12) wird zurücktransportiert, um eine neue Gruppe (10) von Glasbehältern (3) zu greifen,
dadurch gekennzeichnet, daß jede Gruppe (10) der Glasbehälter (3) im Schritt (b) von der Aufnahmestelle (11) in im wesentlichen senkrechter Richtung auf das erste Niveau (17) angehoben, sodann in waagerechter Richtung über den Behälter (18) transportiert und schließlich in senkrechter Richtung auf das zweite Niveau (19) in dem Behälter (18) abgesenkt wird,
und daß im Schritt (c) jede Gruppe (10) der Glasbehälter (3) von dem zweiten Niveau (19) in senkrechter Richtung auf das dritte Niveau (21) angehoben und sodann in waagerechter Richtung weitertransportiert wird.

2. Verfahren nach Anspruch 1,
dadurch gekennzeichnet, daß im Schritt (c) jede Gruppe (10) der Glasbehälter (3) auf dem dritten Niveau (21) über eine Absetzplatte (146) transportiert, sodann abgesenkt und durch Passivieren der Greifvorrichtung (12) auf der Absetzplatte (145) abgesetzt wird,
daß die von den Glasbehältern (3) entleerte Greifvorrichtung (12) gemäß Schritt (f) zurücktransportiert wird,
daß mit einer anderen Greifvorrichtung (147) die auf der Absetzplatte (146) stehenden Gruppe (10) der Glasbehälter (3) ergriffen und auf das dritte Niveau (21) angehoben und sodann in waagerechter Richtung weitertransportiert wird.

3. Verfahren nach Anspruch 1 oder 2,
dadurch gekennzeichnet, daß jede Gruppe (10) der beschichteten Glasbehälter (3) im Schritt (c) auf dem dritten Niveau (21) unmittelbar über das Transportband (22) transportiert wird.

4. Verfahren nach Anspruch 1 oder 2,
dadurch gekennzeichnet, daß im Schritt (c) jede Gruppe (10) der beschichteten Glasbehälter (3) auf dem dritten Niveau (21) in eine Bodenaushärtezone (29) transportiert wird, bevor sie über das Transportband (22) gelangt,
daß in der Bodenaushärtezone (29) im wesentlichen nur die Schicht (2) auf Böden (31) der Glasbehälter (3) ausgehärtet wird,
daß in der Aushärtezone (27) der Rest der Schicht (2) der Glasbehälter (3) ausgehärtet wird,
und daß jede Gruppe (10) der Glasbehälter (3) -im Schritt (c) auf dem dritten Niveau (21) aus der Bodenaushärtezone (29) über das Transportband (22) transportiert wird.

5. Verfahren nach einem der Ansprüche 1 bis 4,
dadurch gekennzeichnet, daß im Schritt (f) die von den Glasbehältern (3) entleerte Greifvorrichtung (12) auf einem vierten Niveau (24) in waagerechter Richtung in eine Position oberhalb der Aufnahmestelle (11) zurücktransportiert und anschließend in senkrechter Richtung zu der Aufnahmestelle (11) hin abgesenkt wird.

6. Verfahren nach einem der Ansprüche 1 bis 5,
dadurch gekennzeichnet, daß im Schritt (f) die entleerte Greifvorrichtung (12) auf einem vierten Niveau (24) in waagerechter Richtung in eine Servicestation (25) zurücktransportiert wird,
daß in der Servicestation (25) Servicehandlungen, wie Kühlung der Greifvorrichtung (12), Reinigung der Greifvorrichtung (12) von anhaftendem Beschichtungsmedium (129), Abwurf von Ausschußbehältern und/oder Austausch der bisher eingesetzten Greifvorrichtung (12) gegen eine andere Greifvorrichtung (12), vorgenommen werden,
und daß die Greifvorrichtung (12) danach auf dem vierten Niveau (24) in waagerechter Richtung in eine Position oberhalb der Aufnahmestelle (11) transportiert und anschließend in senkrechter Richtung zu der Aufnahmestelle (11) hin abgesenkt wird.

7. Verfahren nach Anspruch 5 oder 6,
dadurch gekennzeichnet, daß das vierte Niveau (24) gleich dem ersten Niveau (17) gemacht wird.

8. Verfahren nach einem der Ansprüche 1 bis 7,
dadurch gekennzeichnet, daß ein servicebedürftiger Behälter (18) für das Beschichtungsmedium (129) quer zu einer Transportrichtung (23) der Glasbehälter (3) aus seiner Betriebsposition herausbewegt und durch einen betriebsbereiten Reservebehälter (18) ersetzt wird.

9. Verfahren nach einem der Ansprüche 2 bis 8,
dadurch gekennzeichnet, daß die andere Greifvorrichtung (147) gemäß Schritt (d) von den Glasbehältern (3) entleert und sodann zum Ergreifen einer anderen Gruppe (10) der Glasbehälter (3) zu der Absetzplatte (146) zurücktransportiert wird.

10. Verfahren nach einem der Ansprüche 1 bis 9,
dadurch gekennzeichnet, daß die Glasbehälter (3) im Anschluß an die Aushärtezone (27) abgekühlt und mit einer Vergütung (28) versehen werden.

11. Verfahren nach einem der Ansprüche 1 bis 10,
dadurch gekennzeichnet, daß die Gruppe (10) der Glasbehälter (3) im Schritt (b) in ein ein Pulver (129) als Beschichtungsmedium aufweisendes Wirbelsinterbett abgesenkt wird.

12. Verfahren nach Anspruch 11,
dadurch gekennzeichnet, daß das Pulver (129) einen Bestandteil aus härtbaren Harzen und einen Härterbestandteil aufweist und zu einer zumindest annähernd duroplastischen Schicht (2) auf den Glasbehältern (3) ausgehärtet wird.

13. Verfahren nach einem der Ansprüche 1 bis 10,
dadurch gekennzeichnet, daß die Gruppe (10) der Glasbehälter (3) im Schritt (b) in einen eine Dispersion als Beschichtungsmedium aufweisenden Behälter (18) abgesenkt wird.

14. Verfahren nach Anspruch 13,
dadurch gekennzeichnet, daß in der Dispersion als dispergierte Phase Acrylharze verwendet werden, die zu einer Acrylharzlackschicht auf den Glasbehältern (3) ausgehärtet werden.

15. Glasbehälter (3)
mit einer sich zumindest über einen Teil seiner Außenfläche erstreckenden Schicht (2) aus Kunststoff,
dadurch gekennzeichnet, daß die Schicht (2) mit dem Verfahren nach einem der Ansprüche 1 bis 14 hergestellt ist,
und daß das Verhältnis V = (Glasmasse des erfindungsgemäß beschichteten Glasbehälters (3)): (Glasmasse eines das gleiche Füllvolumen und das gleiche Füllgut aufweisenden, aber unbeschichteten oder nur mit einer Heißendvergütung und einer Kaltendvergütung versehenen Glasbehälters nach dem Stand der Technik) = 0,62 bis 0,86 beträgt.

16. Glasbehälter nach Anspruch 15,
dadurch gekennzeichnet, daß es sich bei der Schicht (2) um eine zumindest annähernd duroplastische Pulverlackschicht (2) handelt.

17. Glasbehälter nach Anspruch 15,
dadurch gekennzeichnet, daß es sich bei der Schicht (2) um eine aus einer Dispersion gewonnene Acrylharzlackschicht (2) handelt.

18. Glasbehälter nach einem der Ansprüche 15 bis 17,
dadurch gekennzeichnet, daß bei einer 0,33 l - Bierflasche V = 100 g/130 g = 0,77 ist.

19. Glasbehälter nach einem der Ansprüche 15 bis 17,
dadurch gekennzeichnet, daß bei einer 0,5 l - Bierflasche V = 130 g/180 g = 0,72 ist.

20. Glasbehälter nach einem der Ansprüche 15 bis 17,
dadurch gekennzeichnet, daß bei einer 0,33 l - Limonaden- oder Mineralwasserflasche V = 115 g/145 g = 0,79 ist.

21. Glasbehälter nach einem der Ansprüche 15 bis 17,
dadurch gekennzeichnet, daß bei einer 10 l - Limonaden- oder Mineralwasserflasche V = 290 g/400 g = 0,73 ist.

22. Glasbehälter nach einem der Ansprüche 15 bis 17,
dadurch gekennzeichnet, daß bei einer 0,75 l -Sektflasche V = 450 g/550 g = 0,82 ist.

23. Glasbehälter nach einem der Ansprüche 15 bis 17,
dadurch gekennzeichnet, daß bei einer 0,75 l -Weinflasche V = 240 g/330 g = 0,73 ist.

24. Glasbehälter nach einem der Ansprüche 15 bis 17,
dadurch gekennzeichnet, daß bei einer 1,0 l - Weinflasche V = 250 g/350 g = 0,72 ist.

25. Glasbehälter nach einem der Ansprüche 15 bis 17,
dadurch gekennzeichnet, daß bei einer 1,0 l - Flasche für stilles Wasser V = 250 g/290 g = 0,86 ist.

26. Glasbehälter nach einem der Ansprüche 15 bis 17,
dadurch gekennzeichnet, daß bei einer 1,5 l - Flasche für stilles Wasser V = 380 g/480 g = 0,79 ist.

27. Glasbehälter nach einem der Ansprüche 15 bis 17,
dadurch gekennzeichnet, daß bei einer 16 U.S. fluid ounces (= 474 ml) - Softdrinkflasche V = 130 g/180 g = 0,72 ist.

28. Glasbehälter nach einem der Ansprüche 15 bis 17,
dadurch gekennzeichnet, daß bei einer 12 U.S. fluid ounces (= 355 ml) - Bierflasche für Kaltabfüllung V = 120 g/195 g = 0,62 ist.

29. Glasbehälter nach einem der Ansprüche 15 bis 17,
dadurch gekennzeichnet, daß bei einer 500 ml - Softdrinkflasche V = 130 g/180 g = 0,72 ist.

30. Glasbehälter nach einem der Ansprüche 15 bis 17,
dadurch gekennzeichnet, daß bei einer 12 U.S. fluid ounces (355 ml) - Softdrinkflasche V = 115 g/160 g = 0,72 ist.

31. Glasbehälter nach einem der Ansprüche 15 bis 17,
dadurch gekennzeichnet, daß bei einer 13 U.S. fluid ounces (= 381 ml) - Bierflasche für Kaltabfüllung V = 130 g/210 g = 0,62 ist.

32. Glasbehälter nach einem der Ansprüche 18 bis 31,
dadurch gekennzeichnet, daß in der jeweiligen Formel für V der erfindungsgemäße Glasmassenwert im Zähler der Formel in einem Bereich von ± 10 % vom angegebenen Wert liegt.

## Claims

1. Process for the application of a coating (2) to at least a part of the exterior surface of glass containers (3), comprising the following steps:
(a) the glass containers (3) are brought to a temperature above the room temperature suitable for the coating process,
(b) each respective group (10) of the glass containers (3) is gripped at a pick-up site (11) by activation of a gripping device (12), is raised to a first level (17), is conveyed to above a vessel (18) containing a coating medium (129), and is lowered wholly or partially into the coating medium (129) to a second level (19) until coating medium (129) adheres in the desired manner to the glass containers (3),
(c) each group (10) of the coated glass containers (3) is raised up from the coating medium (129) to a third level (21) and is conveyed onwards,
(d) the gripping device (12) is subsequently deactivated, whereby the group (10) of the glass containers (3) is delivered from the gripping device (12),
(e) each group (10) of the coated glass containers (3) is delivered onto a conveyor belt (22) and is conveyed by the conveyor belt (22) through a setting zone (27), in which setting zone (27) at least a part of the coating (2) on the glass containers (3) is hardened, and
(f) the gripping device (12) emptied of the glass containers (3) is conveyed back in order to grip a new group (10) of glass containers (3),
characterised in that each group (10) of the glass containers (3) is raised in step (b) from the pick-up site (11) in a substantially vertical direction to the first level (17), then is conveyed horizontally to above the vessel (18) and then is lowered vertically into the vessel (18) to the second level (19),
and that in step (c) each group (10) of the glass containers (3) is raised from the second level (19) vertically to the third level (21) and then is conveyed onwards horizontally.

2. Process according to claim 1,
characterised in that in step (c) each group (10) of the glass containers (3) is conveyed at the third level (21) to above a set-down plate (146), then is lowered and by deactivation of the gripping device (12) is deposited on the set-down plate (146),
the gripping device (12) emptied of the glass containers (3) is conveyed back according to step (f),
and by means of a further gripping device (147) the group (10) of the glass containers (3) standing on the set-down plate (146) is gripped and raised to the third level (21) and then is conveyed onwards horizontally.

3. Process according to claim 1 or 2,
characterised in that each group (10) of the coated glass containers (3) is conveyed in step (c) at the third level (21) directly to above the conveyor belt (22).

4. Process according to claim 1 or 2,
characterised in that in step (c) each group (10) of the coated glass containers (3) is conveyed at the third level (21) to a base setting zone (29) before it arrives above the conveyor belt (22),
in the base setting zone (29) essentially only the coating (2) on bases (31) of the glass containers (3) is hardened,
in the setting zone (27) the rest of the coating (2) of the glass containers (3) is hardened,
and each group (10) of the glass containers (3) is conveyed in step (c) at the third level (21) from the base setting zone (29) to above the conveyor belt (22).

5. Process according to one of claims 1 to 4,
characterised in that in step (f) the gripping device (12) emptied of the glass containers (3) is conveyed back at a fourth level (24) horizontally into a position above the pick-up site (11), and subsequently is lowered down vertically to the pick-up site (11).

6. Process according to one of claims 1 to 5,
characterised in that in step (f) the emptied gripping device (12) is conveyed back at a fourth level (24) horizontally to a service station (25),
in the service station (25) servicing treatments are carried out, such as cooling of the gripping device (12), cleaning of the gripping device (12) from adhering coating medium (129), discharge of rejected containers and/or exchange of the previously used gripping device (12) for a replacement gripping device (12),
and the gripping device (12) is conveyed then at the fourth level (24) horizontally into a position above the pick-up site (11) and subsequently is lowered down vertically to the pick-up site (11).

7. Process according to claim 5 or 6,
characterised in that the fourth level (24) is made the same as the first level (17).

8. Process according to one of claims 1 to 7,
characterised in that a vessel (18) for the coating medium (129) in need of service is moved out from its operational position transversely to a direction of transportation (23) of the glass containers (3) and is replaced by an operationally ready reserve vessel (18).

9. Process according to one of claims 2 to 8,
characterised in that said further gripping device (147) according to step (d) is emptied of the glass containers (3) and then is conveyed back to the set-down plate (146) in order to pick up another group (10) of the glass containers (3).

10. Process according to one of claims 1 to 9,
characterised in that the glass containers (3) are cooled following the setting zone (27) and are provided with a cold-end coating (28).

11. Process according to one of claims 1 to 10,
characterised in that the group (10) of the glass containers (3) is lowered in step (b) into a fluidized sinter bed containing a powder (129) as coating medium.

12. Process according to claim 11,
characterised in that the powder (129) comprises a constituent of hardenable resins and a hardener component, and is hardened to an at least approximately duroplastic coating (2) on the glass containers (3).

13. Process according to one of claims 1 to 10,
characterised in that the group (10) of the glass containers (3) is lowered in step (b) into a vessel (18) containing a dispersion as coating medium.

14. Process according to claim 13,
characterised in that acrylic resins are used in the dispersion as dispersed phase, which resins are hardened to an acrylic resin lacquer coating on the glass containers (3).

15. Glass container (3)
comprising a coating (2) of plastics material extending at least over part of its exterior surface,
characterised in that the coating (2) is produced by the process according to one of claims 1 to 14,
and that the ratio V = (glass mass of the glass container (3) coated in accordance with the invention): (glass mass of a glass container according to the prior art having the same filling volume and the same filled product but uncoated or provided only with a hot-end coating and a cold-end coating) = 0.62 to 0.86.

16. Glass container according to claim 15,
characterised in that the coating (2) is an at least approximately duroplastic powder lacquer coating (2).

17. Glass container according to claim 15,
characterised in that the coating (2) is an acrylic resin lacquer coating (2) obtained from a dispersion.

18. Glass container according to one of claims 15 to 17,
characterised in that for a 0.33 I beer bottle V = 100 g/130 g = 0.77.

19. Glass container according to one of claims 15 to 17,
characterised in that for a 0.5 l beer bottle V = 130 g/180 g = 0.72.

20. Glass container according to one of claims 15 to 17,
characterised in that for a 0.33 I lemonade or mineral water bottle V = 115 g/145 g = 0.79.

21. Glass container according to one of claims 15 to 17,
characterised in that for a 1.0 I lemonade or mineral water bottle V = 290 g/400 g = 0.73.

22. Glass container according to one of claims 15 to 17,
characterised in that for a 0.75 I champagne bottle V = 450 g/550 g = 0.82.

23. Glass container according to one of claims 15 to 17,
characterised in that for a 0.75 I wine bottle V = 240 g/330 g = 0.73.

24. Glass container according to one of claims 15 to 17,
characterised in that for a 1.0 I wine bottle V = 250 g/350 g = 0.72.

25. Glass container according to one of claims 15 to 17,
characterised in that for a 1.0 I bottle for still water V = 250 g/290 g = 0.86.

26. Glass container according to one of claims 15 to 17,
characterised in that for a 1.5 I bottle for still water V = 380 g/480 g = 0.79.

27. Glass container according to one of claims 15 to 17,
characterised in that for a 16 U.S. fluid ounce (=474 ml) soft drink bottle V = 130 g/180 g = 0.72.

28. Glass container according to one of claims 15 to 17,
characterised in that for a 12 U.S. fluid ounce (= 355 ml) beer bottle for cold filling V = 120 g/195 g = 0.62.

29. Glass container according to one of claims 15 to 17,
characterised in that for a 500 ml soft drink bottle V = 130 g/180 g = 0.72.

30. Glass container according to one of claims 15 to 17,
characterised in that for a 12 U.S. fluid ounce (355 ml) soft drink bottle V = 115 g/160 g = 0.72.

31. Glass container according to one of claims 15 to 17,
characterised in that for a 13 U.S. fluid ounce (= 381 ml) beer bottle for cold filling V = 130 g/210 g = 0.62.

32. Glass container according to one of claims 18 to 31,
characterised in that in the respective formula for V the glass mass value according to the invention in the numerator of the formula lies within a range of plus to minus 10% of the given value.

## Revendications

1. Procédé pour déposer une couche (2) sur au moins une partie de la surface externe de récipients en verre (3),
comprenant les étapes suivantes:
(a) les récipients en verre (3) sont portés à une température supérieure à la température ambiante, appropriée pour le revêtement,
(b) respectivement un groupe (10) des récipients en verre (3) est saisi, dans une zone de préhension (11), par activation d'un dispositif preneur (12), élevé à un premier niveau (17), transporté au-dessus d'un récipient (18) qui contient un milieu de revêtement (129) et abaissé entièrement ou en partie à un deuxième niveau (19) dans le milieu de revêtement (129), jusqu'à ce que de milieu de revêtement (129) adhère aux récipients en verre (3) de la façon souhaitée,
(c) chaque groupe (10) des récipients en verre (3) revêtus est extrait du milieu de revêtement (129) et élevé à un troisième niveau (21) et transporté plus loin,
(d) le dispositif preneur (12) est ensuite désactivé, de sorte que le groupe (10) des récipients en verre (3) est déchargé par le dispositif preneur (12),
(e) chaque groupe (10) des récipients en verre revêtus (3) est déchargé sur une bande transporteuse (22) et transporté par la bande transporteuse (22) à travers une zone de durcissement (27) dans laquelle au moins une partie de la couche (2) des récipients en verre (3) est durcie, et
(f) le dispositif preneur (12) vidé des récipients en verre (3) est transporté en sens inverse, pour saisir un nouveau groupe (10) de récipients en verre (3),
caractérisé en ce que, dans l'étape (b), chaque groupe (10) des récipients en verre (3) est élevé de la zone de préhension (11) au premier niveau (17) dans une direction sensiblement verticale, puis transporté dans une direction horizontale au-dessus du récipient (18) et finalement abaissé dans une direction verticale au deuxième niveau (19), dans le récipient (18),
et en ce que, dans l'étape (c), chaque groupe (10) des récipients en verre (3) est élevé du deuxième niveau (19) au troisième niveau (21) dans la direction verticale, puis transporté plus loin dans la direction horizontale.

2. Procédé selon la revendication 1, caractérisé en ce que, dans l'étape (c), chaque groupe (10) des récipients en verre (3) est transporté sur le troisième niveau (21) au-dessus d'une plaque de dépose (146), puis abaissé et déposé sur la plaque de dépose (146) par désactivation du dispositif preneur (12),
en ce que le dispositif preneur (12) vidé des récipients en verre (3) est transporté en sens inverse comme dans l'étape (f),
en ce que, au moyen d'un autre dispositif preneur (147), le groupe (10) des récipients en verre (3) qui se trouve sur la plaque de dépose (146), est saisi et élevé au troisième niveau (21), puis transporté plus loin dans la direction horizontale.

3. Procédé selon la revendication 1 ou 2, caractérisé en ce que, dans l'étape (c), chaque groupe (10) des récipients en verre (3) revêtus est directement transporté sur le troisième niveau (21) au-dessus de la bande transporteuse (22).

4. Procédé selon la revendication 1 ou 2,
caractérisé en ce que, dans l'étape (c), chaque groupe (10) des récipients en verre (3) revêtus est transporté sur le troisième niveau (21) dans une zone (29) de durcissement des fonds avant de parvenir sur la bande transporteuse (22),
en ce que, dans la zone (29) de durcissement des fonds, sensiblement seulement la couche (2) déposée sur des fonds (31) des récipients en verre (3) est durcie,
en ce que, dans la zone de durcissement (27), le reste de la couche (2) des récipients en verre (3) est durcie,
et en ce que, dans l'étape (c), chaque groupe (10) des récipients en verre (3) est évacué de la zone (29) de durcissement des fonds sur le troisième niveau (21), au-dessus de la bande transporteuse (22).

5. Procédé selon une des revendications 1 à 4, caractérisé en ce que, dans l'étape (f), le dispositif preneur (12) vidé des récipients en verre (3), est transporté en sens inverse sur un quatrième niveau dans la direction horizontale jusque dans une position située au-dessus de la zone de préhension (11) et, ensuite, abaissé dans la direction verticale jusqu'à la zone de préhension (11).

6. Procédé selon une des revendications 1 à 5,
caractérisé en ce que, dans l'étape (f), le dispositif preneur (12) vidé est transporté en sens inverse, sur un quatrième niveau (24), dans une direction horizontale, jusque dans une station d'entretien (25),
en ce que, dans la station d'entretien (25), sont effectuées des opérations d'entretien, comme le refroidissement du dispositif preneur (12), le nettoyage du dispositif preneur (12) du milieu du revêtement (129) qui y adhère, l'éjection de récipients rebutés et/ou le remplacement du dispositif preneur (12) utilisé jusqu'à présent par un autre dispositif preneur (12)
et en ce que, ensuite, le dispositif preneur (12) est transporté, sur le quatrième niveau (24), dans une direction horizontale, jusque dans une position située au-dessus de la zone de préhension (11) et, ensuite, abaissé dans la direction verticale jusqu'à la zone de préhension (11).

7. Procédé selon la revendication 5 ou 6, caractérisé en ce que le quatrième niveau (24) est réalisé comme le premier niveau (17).

8. Procédé selon une des revendications 1 à 7, caractérisé en ce qu'un récipient (18) destiné à contenir le milieu de revêtement (129) et qui demande de l'entretien est évacué de sa position de service transversalement à une direction de transport (23) des récipients en verre (3) et remplacé par un récipient de réserve (18) prêt au service.

9. Procédé selon une des revendications 2 à 8, caractérisé en ce que l'autre dispositif preneur (147) est vidé des récipients en verre (3) comme dans l'étape (d), puis est aussitôt transporté en sens inverse jusqu'à la plaque de dépose (146) pour saisir un autre groupe (10) des récipients en verre (3).

10. Procédé selon une des revendications 1 à 9, caractérisé en ce qu'à la suite de la zone de durcissement (27), les récipients en verre (3) sont refroidis et subissent un traitement d'amélioration (28).

11. Procédé selon une des revendications 1 à 10, caractérisé en ce que, dans l'étape (b), le groupe (10) des récipients en verre (3) est abaissé dans un lit fluidisé de frittage contenant une poudre (129) en qualité de milieu de revêtement.

12. Procédé selon la revendication 11, caractérisé en ce que la poudre (129) comprend un composant composé de résines durcissables et un composant durcisseur, et est durcie pour constituer une couche (2) au moins approximativement thermodurcissable (2) sur les récipients en verre (3).

13. Procédé selon une des revendications 1 à 10, caractérisé en ce que, dans l'étape (b), le groupe (10) des récipients en verre (3) est abaissé dans un récipient (18) qui contient une dispersion en qualité de milieu de revêtement.

14. Procédé selon la revendication 13, caractérisé en ce que, dans la dispersion, on utilise comme phase dispersée, des résines acryliques qui sont durcies sur les récipients en verre (3) pour former une couche de laque de résine acrylique.

15. Récipient en verre (3) muni d'une couche (2) de matière synthétique qui s'étend sur au moins une partie de sa surface externe,
caractérisé en ce que la couche (2) est produite per le procédé selon une des revendications 1 à 14,
et en ce que le rapport V = (masse de verre du récipient en verre (3) revêtu selon l'invention) : (masse de verre d'un récipient en verre selon l'état de la technique qui présente le même volume de remplissage et la même matière de remplissage, mais qui est non revêtu ou seulement muni d'un traitement d'amélioration à chaud et d'un traitement d'amélioration à froid) = 0,62 à 0,86.

16. Récipient en verre selon la revendication 15, caractérisé en ce que la couche (2) est constituée per une couche de laque en poudre (2) au moins approximativement thermodurcissable.

17. Récipient en verre selon la revendication 15, caractérisé en ce qué la couche (2) est constituée par une couche de laque de résine acrylique (2) obtenue à partir d'une dispersion.

18. Récipient en verre selon une des revendications 15 à 17, caractérisé en ce que, dans le cas d'une bouteille de bière de 0,33 I, V = 100 g/ 130 g = 0,77.

19. Récipient en verre selon une des revendications 15 à 17, caractérisé en ce que, dans le cas d'une bouteille de bière de 0,5 I, V = 130 g/ 180 g = 0,72.

20. Récipient en verre selon une des revendications 15 à 17, caractérisé en ce que, dans le cas d'une bouteille de limonade ou d'eau minérale de 0,33 I, V = 115 g/ 145 g = 0,79.

21. Récipient en verre selon une des revendications 15 à 17, caractérisé en ce que, dans le cas d'une bouteille de limonade ou d'eau minérale, de 1,0 I, V = 290 g/400 g = 0,73.

22. Récipient en verre selon une des revendications 15 à 17, caractérisé en ce que, dans le cas d'une bouteille de champagne de 0,75 I, V = 450 g/550 g = 0,82.

23. Récipient en verre selon une des revendications 15 à 17, caractérisé en ce que, dans le cas d'une bouteille de vin de 0,75 I, V = 240 g/330 g = 0,73.

24. Récipient en verre selon une des revendications 15 à 17, caractérisé en ce que, dans le cas d'une bouteille de vin de 1,0 I, V = 250 g/350 g = 0,72.

25. Récipient en verre selon une des revendications 15 à 17, caractérisé en ce que, dans le cas d'une bouteille de 1,0 I pour eau non gazeuse, V = 250 g/290 g = 0,86.

26. Récipient en verre selon une des revendications 15 à 17, caractérisé en ce que, dans le cas d'une bouteille de 1,5 I pour eau non gazeuse, V = 380 g/480 g = 0,79.

27. Récipient en verre selon une des revendications 15 à 17, caractérisé en ce que, dans le cas d'une bouteille de boisson sans alcool de 16 U.S. fluid ounces (= 474 ml), V = 130 g/ 180 g = 0,72.

28. Récipient en verre selon une des revendications 15 à 17, caractérisé en ce que, dans le cas d'une bouteille de bière pour embouteillage à froid de 12 U.S. fluid ounces (= 355 ml), V = 120 g/ 195 g = 0,62.

29. Récipient en verre selon une des revendications 15 à 17, caractérisé en ce que, dans le cas d'une bouteille de boisson sans alcool de 500 ml, V = 130 g/ 180 g = 0,72.

30. Récipient en verre selon une des revendications 15 à 17, caractérisé en ce que, dans le cas d'une bouteille de boisson sans alcool de 12 U.S. fluid ounces (355 ml), V = 115 g/ 160 g = 0,72

31. Récipient en verre selon une des revendications 15 à 17, caractérisé en ce que, dans le cas d'une bouteille de bière pour embouteillage à froid de 13 U.S. fluid ounces (= 381 ml), V = 130 g/210 g = 0,62.

32. Récipient en verre selon une des revendications 18 à 31, caractérisé en ce que, dans la formule respective pour V, la valeur de la masse de verre selon l'invention dans le numérateur de la formule se trouve dans un intervalle de ± 10% de la valeur indiquée.
